# EUROPEAN PATENT APPLICATION

(11) **EP 4 818 224 A1**
(43) Date of publication of application: **07.10.2026**
(21) Application number: 24897287.9
(22) Date of filing: 12.11.2024
(51) Int. Cl.: C08G 59/24, C08G 59/62, C08J 5/24

(54) **EPOXY RESIN COMPOSITION AND CURED PRODUCT THEREOF, PREPREG, FIBER-REINFORCED COMPOSITE MATERIAL, AND FIBER-REINFORCED COMPOSITE MATERIAL**

(30) Priority: 28.11.2023 JP 2023200447
(71) Applicant: MITSUBISHI GAS CHEMICAL COMPANY, INC., Chiyoda-ku Tokyo 100-8324 (JP)
(72) Inventor: WAKAHARA Daiki, Hiratsuka-shi, Kanagawa 254-0016 (JP); IKEUCHI Kousuke, Hiratsuka-shi, Kanagawa 254-0016 (JP)
(74) Representative: Vossius & Partner Patentanwälte Rechtsanwälte mbB
(86) International application number: PCT/JP2024/040229
(87) International publication number: WO 2025/115600

(57) **Abstract**

An epoxy resin composition including an epoxy resin (A) and an epoxy resin curing agent (B), the epoxy resin (A) containing a predetermined epoxy resin (A1) and a predetermined epoxy resin (A2) at a predetermined ratio, and the epoxy resin curing agent (B) containing resorcinol (B1); a cured product thereof; a prepreg using the epoxy resin composition; a fiber-reinforced composite material; and a high-pressure gas container.

## Description

### Technical Field

The present invention relates to an epoxy resin composition and a cured product of the same, a prepreg, a fiber-reinforced composite material, and a high-pressure gas container containing the fiber-reinforced composite material.

### Background Art

In recent years, environmentally friendly natural gas vehicles (CNG vehicles) and fuel cell vehicles (FCV) are becoming more popular. Fuel cell vehicles use, as their power sources, fuel cells, and constructing hydrogen stations where hydrogen as their fuels is compressed at a high pressure for filling in vehicles is essential.

Although steel tanks have been used so far as high-pressure gas storage tanks for use in hydrogen stations for fuel cell vehicles or as automotive fuel tanks for CNG vehicles, fuel cell vehicles etc., development of a lighter high-pressure gas storage tank in which a resin material is used for a liner of the tank or its outer layer is in progress. Weight reduction of automotive fuel tanks can improve the fuel economy of the vehicles equipped therewith and also provides other benefits.

As a resin material constituting a high-pressure gas storage tank, the use of a resin having a gas barrier property and a fiber-reinforced composite material (FRP) in which reinforcing fibers are impregnated with the resin is known. For example, Patent Document 1 discloses a method for producing a pressure container including a liner and an outer layer of the liner, the outer layer being configured by a composite material containing reinforcing fibers and a matrix resin, the method including winding the composite material around an outer periphery of the liner to form the outer layer by adopting the filament winding process or the tape winding process.

When a matrix resin in a composite material is not a thermoplastic resin but a cured product of a thermosetting resin, the winding process can be similarly adopted. In this case, a continuous reinforcing fiber bundle impregnated with a thermosetting resin (tow prepreg) is wound around an outer periphery of a liner, and then heated and cured to be molded.

A prepreg using an epoxy resin composition as a matrix resin is also known. For example, Patent Document 2 discloses: an epoxy resin composition containing an epoxy resin, a compound having two functional groups each having one active hydrogen that is reactive with an epoxy group in the molecule, and a curing agent; a prepreg and a fiber-reinforced composite material formed by impregnating reinforcing fibers with the epoxy resin composition.

Furthermore, as a thermosetting resin composition having a gas barrier property, for example, Patent Document 3 discloses a composition containing a meta-substituted aromatic resin, and an additional aromatic epoxy resin, and having an oxygen permeability equal to or less than a predetermined value, as an oxygen barrier composition for electric parts.

### Citation List

### Patent Document

Patent Document 1: WO 2016/084475
Patent Document 2: JP 2002-284852 A
Patent Document 3: JP 2012-533643 A

### Summary of Invention

### Technical Problem

A cured product of the thermosetting resin composition to be used for a high-pressure gas container for hydrogen gas storage is required to have a high barrier property against hydrogen gas and high heat resistance. Furthermore, from the viewpoint of improving the impact resistance of the high-pressure gas container, the elongation of the cured product is also required to be high. However, it is difficult to satisfy all the required properties as described above with the techniques disclosed in Patent Documents 1 to 3.

An object of the present invention is to provide an epoxy resin composition capable of preparing a cured product having a high hydrogen gas barrier property, high heat resistance, and a high elongation; a cured product thereof; a prepreg using the epoxy resin composition; a fiber-reinforced composite material; and a high-pressure gas container.

### Solution to Problem

The present inventors have found that the above-described problems can be solved by an epoxy resin composition using two specific epoxy resins as main agent epoxy resins and further using an epoxy resin curing agent containing resorcinol.

That is, the present invention relates to the following.
[1] An epoxy resin composition, including an epoxy resin (A) and an epoxy resin curing agent (B),
   the epoxy resin (A) containing an epoxy resin (A1) and an epoxy resin (A2),
   the epoxy resin (A1) being an epoxy resin having a glycidyl group derived from triphenylmethane type phenol, and
   the epoxy resin (A2) being at least one selected from the group consisting of: an epoxy resin (A2-1) having a glycidyl group derived from bisphenol F; an epoxy resin (A2-2) having a glycidyl group derived from bisphenol A; an epoxy resin (A2-3) having a glycidyl group derived from novolak type phenol; and an epoxy resin (A2-4) having a glycidyl group derived from a polyol having a naphthalene backbone,
   wherein [(A1)/(A2)], a mass ratio of the epoxy resin (A1) to the epoxy resin (A2) in the epoxy resin (A), is 1/99 to 90/10,
   the epoxy resin curing agent (B) containing resorcinol (B1).
[2] The epoxy resin composition according to [1], wherein the epoxy resin curing agent (B) further contains an epoxy resin curing agent (B2) other than resorcinol (B1), and the epoxy resin curing agent (B2) contains a phenolic curing agent (B2-1) other than resorcinol (B1).
[3] The epoxy resin composition according to [2], wherein the phenolic curing agent (B2-1) contains at least one selected from the group consisting of bisphenol F, bisphenol A, novolak type phenol, and triphenylmethane type phenol.
[4] The epoxy resin composition according to any one of [1] to [3], wherein [(A1)/(A2)], a mass ratio of the epoxy resin (A1) to the epoxy resin (A2) in the epoxy resin (A), is 5/95 to 70/30.
[5] The epoxy resin composition according to any one of [1] to [4], further including a curing accelerator (C), the curing accelerator (C) containing at least one selected from the group consisting of imidazoles, tertiary amines, and phosphorus compounds.
[6] The epoxy resin composition according to any one of [1] to [5], further including a stress relaxation component (D).
[7] The epoxy resin composition according to any one of [1] to [6], further including a non-reactive diluent (E).
[8] The epoxy resin composition according to any one of [1] to [7], wherein a cured product of the epoxy resin composition has a hydrogen gas permeation coefficient at 23°C of 7.0 × 10⁻¹¹ [cc·cm/(cm²·s·cmHg)] or less.
[9] A cured product of the epoxy resin composition according to any one of [1] to [8].
[10] A prepreg including the epoxy resin composition according to any one of [1] to [8] and a reinforcing fiber.
[11] The prepreg according to [10], wherein the reinforcing fiber is at least one selected from the group consisting of a carbon fiber, a glass fiber, and a basalt fiber.
[12] The prepreg according to [10] or [11], wherein the prepreg is a tow prepreg or tape prepreg.
[13] A fiber-reinforced composite material, which is a cured product of the prepreg according to any one of [10] to [12].
[14] A high-pressure gas container including the fiber-reinforced composite material according to [13].

### Advantageous Effects of Invention

The present invention can provide an epoxy resin composition capable of preparing a cured product having a high hydrogen gas barrier property, high heat resistance, and a high elongation; a cured product thereof; a prepreg using the epoxy resin composition; a fiber-reinforced composite material; and a high-pressure gas container. The high-pressure gas container has a high hydrogen gas barrier property and is suitable as a container for storing high-pressure hydrogen gas.

### Description of Embodiments

### [Epoxy resin composition]

The epoxy resin composition of the present invention is an epoxy resin composition including an epoxy resin (A) and an epoxy resin curing agent (B), the epoxy resin (A) containing an epoxy resin (A1) and an epoxy resin (A2), the epoxy resin (A1) being an epoxy resin having a glycidyl group derived from triphenylmethane type phenol, and the epoxy resin (A2) being at least one selected from the group consisting of: an epoxy resin (A2-1) having a glycidyl group derived from bisphenol F; an epoxy resin (A2-2) having a glycidyl group derived from bisphenol A; an epoxy resin (A2-3) having a glycidyl group derived from novolak type phenol; and an epoxy resin (A2-4) having a glycidyl group derived from a polyol having a naphthalene backbone, wherein [(A1)/(A2)], a mass ratio of the epoxy resin (A1) to the epoxy resin (A2) in the epoxy resin (A), is 1/99 to 90/10, the epoxy resin curing agent (B) containing resorcinol (B1).

The epoxy resin composition of the present invention has such a constitution, and is thus capable of preparing a cured product having a high hydrogen gas barrier property, high heat resistance, and a high elongation.

In the present specification, the hydrogen gas barrier property, heat resistance, and elongation of the cured product of the epoxy resin composition are respectively determined using a lowness of the hydrogen gas permeation coefficient, a height of the glass transition temperature (Tg), and a value of the tensile elongation as the index. The hydrogen gas barrier property, heat resistance, and elongation of the cured product of the epoxy resin composition can be specifically evaluated by the methods described in Examples.

The reason why the above-described effect can be obtained in the present invention is not clear, but is inferred as follows.

The epoxy resin (A1) having a glycidyl group derived from triphenylmethane type phenol (hereinafter also simply referred to as "epoxy resin (A1)" or "component (A1)") has a plurality of aromatic rings and has a polymer structure in which the aromatic rings are two-dimensionally or three-dimensionally extended, and is thus considered to exhibit a high hydrogen gas barrier property and high heat resistance.

Meanwhile, other epoxy resins, for example, an epoxy resin having a glycidyl group derived from resorcinol can also exhibit a high hydrogen gas barrier property. However, a cured product of the epoxy resin having a glycidyl group derived from resorcinol has a low glass transition temperature and cannot achieve high heat resistance, which is problematic. Furthermore, the epoxy resin having a glycidyl group derived from resorcinol has a low epoxy equivalent and is rapid-curable, and thus the pot life and shelf life of the obtained epoxy resin composition tend to be short.

In contrast, when the epoxy resin (A1) is used as the epoxy resin (A), as in the epoxy resin composition of the present invention, a high hydrogen barrier property and high heat resistance can be obtained in the cured product thereof. Furthermore, the epoxy resin (A1) has a relatively high epoxy equivalent, and it is thus considered that the pot life and shelf life of the epoxy resin composition can be improved.

On the other hand, when the epoxy resin (A) consists of the epoxy resin (A1) alone, the elongation of the cured product of the obtained epoxy resin composition tends to be reduced. When the elongation of the cured product is low, impact resistance of the cured product tends to be reduced, and a problem that the cured product is not suitable for applications such as a high-pressure gas container may occur.

Here, the epoxy resin (A2) (hereinafter also simply referred to as "epoxy resin (A2)" or "component (A2)") has a high elongation of the cured product as compared to the epoxy resin (A1), and is relatively likely to exhibit a hydrogen gas barrier property among epoxy resins. Furthermore, the epoxy resins (A2-1) to (A2-4) have two or more ring structures in the molecule, and thus have high heat resistance. Thus, it is considered that, due to the combination use of the epoxy resins (A1) and (A2) as the epoxy resin (A) at a predetermined mass ratio in the present invention, a cured product having a high elongation can be obtained without significantly impairing the hydrogen gas barrier property and heat resistance derived from the epoxy resin (A1).

Furthermore, it is considered that, due to the use of resorcinol (B1) as the epoxy resin curing agent (B) in the present invention, a high hydrogen gas barrier property derived from a resorcinol backbone can be obtained, and furthermore, the pot life and shelf life can also be improved.

### <Epoxy resin (A)>

The epoxy resin (A) used in the epoxy resin composition of the present invention contains an epoxy resin (A1) and an epoxy resin (A2). The epoxy resin (A1) is an epoxy resin having a glycidyl group derived from triphenylmethane type phenol. The epoxy resin (A2) is at least one selected from the group consisting of an epoxy resin (A2-1) having a glycidyl group derived from bisphenol F, an epoxy resin (A2-2) having a glycidyl group derived from bisphenol A, an epoxy resin (A2-3) having a glycidyl group derived from novolak type phenol, and an epoxy resin (A2-4) having a glycidyl group derived from a polyol having a naphthalene backbone. A mass ratio [(A1)/(A2)] of the epoxy resin (A1) to the epoxy resin (A2) in the epoxy resin (A) is 1/99 to 90/10.

### (Epoxy resin (A1))

The epoxy resin (A1) is an epoxy resin having a glycidyl group derived from triphenylmethane type phenol. Since the epoxy resin (A) contains the epoxy resin (A1), an epoxy resin composition capable of preparing a cured product having a high hydrogen gas barrier property and heat resistance can be provided.

The epoxy resin (A1) is an epoxy resin having a glycidyl group derived from triphenylmethane type phenol. The triphenylmethane type phenol means a phenolic compound containing a triphenylmethane backbone, and the epoxy resin (A1) has a structure in which hydrogen atoms in at least some phenolic hydroxyl groups in the triphenylmethane type phenol are substituted with glycidyl groups. Hereinafter, an epoxy resin having a glycidyl group derived from triphenylmethane type phenol is also simply referred to as "triphenylmethane type epoxy resin".

As the epoxy resin (A1), one type, or two or more types can be used.

As the epoxy resin (A1), commercially available products such as EPICLON series "HP-7250" and "HP-7241" available from DIC CORPORATION can be used.

An epoxy equivalent of the epoxy resin (A1) is preferably 120 g/equivalent or more, and more preferably 150 g/equivalent or more, from the viewpoint of improving the hydrogen gas barrier property and heat resistance. Also, the epoxy equivalent is preferably 800 g/equivalent or less, more preferably 500 g/equivalent or less, still more preferably 300 g/equivalent or less, and further still more preferably 200 g/equivalent or less, from the viewpoint of improving curability. When a mixture of two or more epoxy resins is used as the epoxy resin (A1), the epoxy equivalent of the above epoxy resin (A1) means the epoxy equivalent of the mixture.

A content of the epoxy resin (A1) in the epoxy resin (A) is preferably 1.0 to 90 mass%, more preferably 2.0 to 80 mass%, still more preferably 3.0 to 70 mass%, further still more preferably 3.0 to 60 mass%, further still more preferably 3.0 to 50 mass%, further still more preferably 4.0 to 45 mass%, further still more preferably 5.0 to 35 mass%, further still more preferably 6.0 to 30 mass%, further still more preferably 10 to 30 mass%, and further still more preferably 15 to 30 mass%. When the content of the epoxy resin (A1) in the epoxy resin (A) is within the above-described ranges, the cured product of the obtained epoxy resin composition can readily exhibit a high hydrogen gas barrier property and heat resistance, and a reduction in the elongation can be suppressed.

### (Epoxy resin (A2))

The epoxy resin (A2) is at least one selected from the group consisting of an epoxy resin (A2-1) having a glycidyl group derived from bisphenol F, an epoxy resin (A2-2) having a glycidyl group derived from bisphenol A, an epoxy resin (A2-3) having a glycidyl group derived from novolak type phenol, and an epoxy resin (A2-4) having a glycidyl group derived from a polyol having a naphthalene backbone. It is considered that, when the epoxy resin (A) contains the epoxy resin (A2), a cured product having a high elongation can be obtained without significantly impairing the hydrogen gas barrier property and heat resistance derived from the epoxy resin (A1).

### [Epoxy resin (A2-1)]

The epoxy resin (A2-1) is an epoxy resin having a glycidyl group derived from bisphenol F. The epoxy resin (A2-1) is preferably bisphenol F diglycidyl ether or an oligomer thereof. The epoxy resin (A2-1) may be solid or liquid at ambient temperature (25°C).

As the epoxy resin (A2-1), one type, or two or more types can be used.

An epoxy equivalent of the epoxy resin (A2-1) is preferably 100 g/equivalent or more, more preferably 120 g/equivalent or more, and still more preferably 150 g/equivalent or more, from the viewpoint of obtaining an epoxy resin composition which has a long pot life and a long shelf life and can achieve high heat resistance, a high elongation, and a high hydrogen gas barrier property. Also, the epoxy equivalent is preferably 1200 g/equivalent or less, more preferably 1100 g/equivalent or less, still more preferably 1050 g/equivalent or less, from the viewpoint of improving the curability.

When a mixture of two or more epoxy resins is used as the epoxy resin (A2-1), the epoxy equivalent of the epoxy resin (A2-1) means the epoxy equivalent of the mixture. The same applies to the epoxy resins described below.

As the epoxy resin (A2-1), commercially available products such as "jER806", "jER806H", "jER807", "jER4005P", "jER4007P", and "jER4010P" available from Mitsubishi Chemical Corporation can be used.

### [Epoxy resin (A2-2)]

The epoxy resin (A2-2) is an epoxy resin having a glycidyl group derived from bisphenol A. The epoxy resin (A2-2) is typically bisphenol A diglycidyl ether or an oligomer thereof. The epoxy resin (A2-2) may be solid or liquid at ambient temperature (25°C).

As the epoxy resin (A2-2), one type, or two or more types can be used.

An epoxy equivalent of the epoxy resin (A2-2) is preferably 100 g/equivalent or more, more preferably 120 g/equivalent or more, and still more preferably 150 g/equivalent or more, from the viewpoint of obtaining an epoxy resin composition which has a long pot life and a long shelf life and can achieve high heat resistance, a high elongation, and a high hydrogen gas barrier property. Also, the epoxy equivalent is preferably 1200 g/equivalent or less, more preferably 1000 g/equivalent or less, still more preferably 800 g/equivalent or less, further still more preferably 600 g/equivalent or less, further still more preferably 500 g/equivalent or less, further still more preferably 400 g/equivalent or less, further still more preferably 300 g/equivalent or less, and further still more preferably 250 g/equivalent or less, from the viewpoint of improving the curability.

As the epoxy resin (A2-2), commercially available products such as "jER825", "jER827", "jER828", "jER834", and "jER1001" available from Mitsubishi Chemical Corporation can be used.

### [Epoxy resin (A2-3)]

The epoxy resin (A2-3) is an epoxy resin having a glycidyl group derived from novolak type phenol. The epoxy resin (A2-3) is typically a resin synthesized using novolak type phenol and epichlorohydrin. Examples of novolak type phenol as used herein include phenol novolak, bisphenol A novolak, and cresol novolak, and novolak type phenol is preferably phenol novolak.

The epoxy resin (A2-3) has a molecular weight of preferably 400 to 1500, more preferably 400 to 1000, and still more preferably 400 to 900, from the viewpoint of improving handleability. A melt viscosity (150°C) of the epoxy resin (A2-3) is preferably 9.0 Pa·s or less, more preferably 6.0 Pa·s or less, and still more preferably 3.0 Pa·s or less. From the viewpoint of improving heat resistance, the melt viscosity is preferably 0.1 Pa·s or more, and more preferably 0.3 Pa·s or more.

As the epoxy resin (A2-3), one type, or two or more types can be used.

An epoxy equivalent of the epoxy resin (A2-3) is preferably 100 g/equivalent or more, more preferably 120 g/equivalent or more, and still more preferably 150 g/equivalent or more, from the viewpoint of obtaining an epoxy resin composition which has a long pot life and a long shelf life and can achieve high heat resistance, a high elongation, and a high hydrogen gas barrier property. Also, the epoxy equivalent is preferably 500 g/equivalent or less, more preferably 400 g/equivalent or less, still more preferably 300 g/equivalent or less, further still more preferably 250 g/equivalent or less, and further still more preferably 200 g/equivalent or less, from the viewpoint of improving the curability.

As the epoxy resin (A2-3), commercially available products such as EPICLON series "N730A", "N740", "N770", "N775", and "N865" available from DIC CORPORATION can be used.

### [Epoxy resin (A2-4)]

The epoxy resin (A2-4) has a glycidyl group derived from a polyol having a naphthalene backbone. The polyol having a naphthalene backbone may have one or more naphthalene backbones, and is preferably a polyol having one or two naphthalene backbone(s).

Furthermore, the number of the glycidyl groups in the epoxy resin (A2-4) is preferably from 2 to 4, more preferably from 2 to 3, from the viewpoint of providing an epoxy resin composition which has a long pot life and a long shelf life, and can achieve a high hydrogen gas barrier property.

An epoxy equivalent of the epoxy resin (A2-4) is preferably 100 g/equivalent or more, more preferably 120 g/equivalent or more, and still more preferably 130 g/equivalent or more, from the viewpoint of obtaining an epoxy resin composition which has a long pot life and a long shelf life and can achieve high heat resistance, a high elongation, and a high hydrogen gas barrier property. Also, the epoxy equivalent is preferably 500 g/equivalent or less, more preferably 400 g/equivalent or less, still more preferably 300 g/equivalent or less, further still more preferably 250 g/equivalent or less, and further still more preferably 200 g/equivalent or less, from the viewpoint of improving the curability.

As the epoxy resin (A2-4), an epoxy resin represented by either the following General Formula (A2-4-1) or (A2-4-2) can be preferably exemplified:

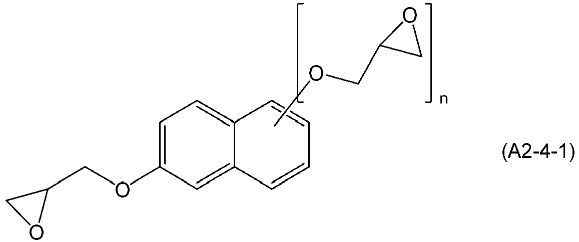

In the formula, n is from 1 to 3.

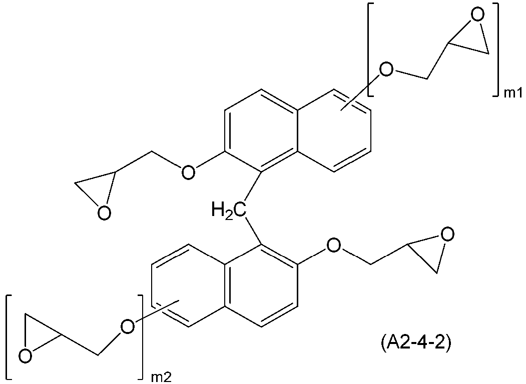

In the formula, m1 is from 0 to 2, m2 is from 0 to 2, and a sum of m1 and m2 is from 0 to 3.

In General Formula (A2-4-1), n is preferably 1 or 2, and more preferably 1.

In General Formula (A2-4-2), m1 is preferably 0 or 1, m2 is preferably 0 or 1, and a sum of m1 and m2 is preferably from 0 to 2, and more preferably 0.

More specifically, as the epoxy resin (A2-4), an epoxy resin represented by any of the following Formulae (A2-4-3) to (A2-4-6) can be exemplified.

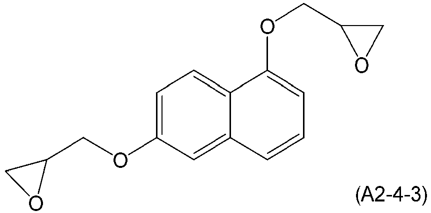

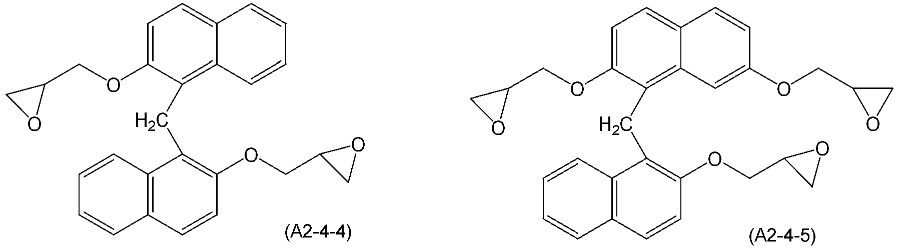

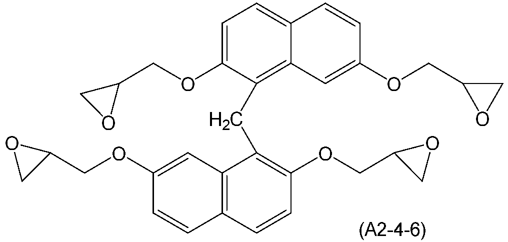

As the epoxy resin (A2-4), one type, or two or more types can be used. Among those described above, the epoxy resin (A2-4) preferably contains an epoxy resin represented by the above-described General Formula (A2-4-1), and more preferably contains an epoxy resin represented by the above-described Formula (A2-4-3), from the viewpoint of obtaining an epoxy resin composition which has a long pot life and a long shelf life and can achieve high heat resistance, a high elongation, and a high hydrogen gas barrier property.

A content of the epoxy resin represented by the above-described General Formula (A2-4-1) in the epoxy resin (A2-4) is preferably 50 mass% or more, more preferably 60 mass% or more, still more preferably 70 mass% or more, further still more preferably 80 mass% or more, and further still more preferably 90 mass% or more, and 100 mass% or less.

As the epoxy resin (A2-4), commercially available products such as EPICLON series "HP-4032SS" (epoxy resin represented by Formula (A2-4-3)), "HP-4700" and "HP-4710" (epoxy resins represented by Formula (A2-4-6)), "EXA-4750" (epoxy resin represented by Formula (A2-4-5)), "HP-4770" (epoxy resin represented by Formula (A2-4-4)), "HP-5000", "HP-9900-75M", and "HP-9500" available from DIC CORPORATION can be used.

The epoxy resin (A2) preferably contains at least one selected from the group consisting of the epoxy resins (A2-1), (A2-2), and (A2-3), more preferably contains the epoxy resin (A2-3), still more preferably contains the epoxy resin (A2-1) or (A2-2) and the epoxy resin (A2-3), and further still more preferably contains the epoxy resin (A2-1) and the epoxy resin (A2-3), from the viewpoint of obtaining an epoxy resin composition which has a long pot life and a long shelf life and can achieve high heat resistance, a high elongation, and a high hydrogen gas barrier property.

When the epoxy resin (A2) contains the epoxy resin (A2-3), a content of the epoxy resin (A2-3) in the epoxy resin (A2) is preferably 30 mass% or more, more preferably 40 mass% or more, still more preferably 50 mass% or more, and further still more preferably 60 mass% or more, and 100 mass% or less, from the viewpoint of obtaining an epoxy resin composition which has a long pot life and a long shelf life and can achieve high heat resistance, a high elongation, and a high hydrogen gas barrier property.

When the epoxy resin (A2) contains the epoxy resin (A2-1) or (A2-2) and the epoxy resin (A2-3), a total content of the epoxy resin (A2-1) and (A2-2) in the epoxy resin (A2) is preferably 2.0 mass% or more, more preferably 3.0 mass% or more, and still more preferably 5.0 mass% or more, from the viewpoint of obtaining an epoxy resin composition which has a long pot life and a long shelf life and can achieve high heat resistance, a high elongation, and a high hydrogen gas barrier property, and is preferably 40 mass% or less, more preferably 30 mass% or less, still more preferably 20 mass% or less, and further still more preferably 10 mass% or less, from the viewpoint of obtaining an epoxy resin composition which can achieve a higher hydrogen gas barrier property.

An epoxy equivalent of the epoxy resin (A2) is preferably 120 g/equivalent or more, and more preferably 150 g/equivalent or more, from the viewpoint of obtaining an epoxy resin composition which has a long pot life and a long shelf life and can achieve high heat resistance, a high elongation, and a high hydrogen gas barrier property. Also, the epoxy equivalent is preferably 800 g/equivalent or less, more preferably 500 g/equivalent or less, still more preferably 300 g/equivalent or less, and further still more preferably 250 g/equivalent or less, from the viewpoint of improving curability.

A content of the epoxy resin (A2) in the epoxy resin (A) is preferably 10 to 99 mass%, more preferably 20 to 98 mass%, still more preferably 30 to 97 mass%, further still more preferably 40 to 97 mass%, further still more preferably 50 to 97 mass%, further still more preferably 55 to 96 mass%, further still more preferably 65 to 95 mass%, further still more preferably 70 to 94 mass%, further still more preferably 70 to 90 mass%, and further still more preferably 70 to 85 mass%. When the content of the epoxy resin (A2) in the epoxy resin (A) is within the above-described ranges, an epoxy resin composition which has a longer pot life and a longer shelf life and can achieve higher heat resistance, a higher elongation, and a higher hydrogen gas barrier property can be obtained.

A mass ratio [(A1)/(A2)] of the epoxy resin (A1) to the epoxy resin (A2), which are contained in the epoxy resin (A), is 1/99 to 90/10, preferably 2/98 to 80/20, more preferably 3/97 to 70/30, still more preferably 5/95 to 70/30, further still more preferably 5/95 to 60/40, further still more preferably 5/95 to 50/50, further still more preferably 5/95 to 40/60, further still more preferably 5/95 to 30/70, further still more preferably 10/90 to 30/70, further still more preferably 15/85 to 30/70, and further still more preferably 20/80 to 30/70, from the viewpoint of obtaining an epoxy resin composition which has a long pot life and a long shelf life and can achieve high heat resistance, a high elongation, and a high hydrogen gas barrier property.

The epoxy resin (A) can also contain an epoxy resin other than the epoxy resin (A1) and the epoxy resin (A2). Examples of the epoxy resins other than the epoxy resin (A1) and the epoxy resin (A2) include an epoxy resin having an aminoglycidyl group, and an epoxy resin having a glycidyloxy group derived from a polyol having no aromatic ring. Examples of the polyol having no aromatic ring include a chain aliphatic polyol that may contain an ether bond, and an aliphatic polyol having a cycloaliphatic structure.

Note that, from the viewpoint of exhibiting a high hydrogen gas barrier property, the total content of the epoxy resin (A1) and the epoxy resin (A2) in the epoxy resin (A) is preferably 70 mass% or more, more preferably 80 mass% or more, still more preferably 90 mass% or more, and further still more preferably 95 mass% or more, and 100 mass% or less.

In the epoxy resin (A) used in the present invention, the content of the epoxy resin having a glycidyl group derived from resorcinol is preferably 20 mass% or less, more preferably 10 mass% or less, still more preferably 5 mass% or less, further still more preferably 2 mass% or less, and further still more preferably less than 1 mass%, from the viewpoint of obtaining a cured product of the epoxy resin composition having a longer pot life and a longer shelf life, and higher heat resistance.

The epoxy equivalent of the epoxy resin (A) is preferably 100 g/equivalent or more, more preferably 120 g/equivalent or more, and still more preferably 150 g/equivalent or more, from the viewpoint of obtaining an epoxy resin composition which has a long pot life and a long shelf life and can achieve high heat resistance, a high elongation, and a high hydrogen gas barrier property. Also, the epoxy equivalent is preferably 1200 g/equivalent or less, more preferably 1000 g/equivalent or less, still more preferably 800 g/equivalent or less, further still more preferably 600 g/equivalent or less, further still more preferably 500 g/equivalent or less, further still more preferably 400 g/equivalent or less, further still more preferably 300 g/equivalent or less, and further still more preferably 250 g/equivalent or less, from the viewpoint of improving the curability.

### <Epoxy resin curing agent (B)>

The epoxy resin curing agent (B) used in the epoxy resin composition of the present invention contains resorcinol (B1). It is considered that this configuration can achieve a high hydrogen gas barrier property, and improve the pot life and the shelf life.

### (Resorcinol (B1))

The resorcinol (B1) is 1,3-dihydroxybenzene.

A content of the resorcinol (B1) in the epoxy resin curing agent (B) is preferably 30 mass% or more, more preferably 40 mass% or more, still more preferably 50 mass% or more, further still more preferably 70 mass% or more, further still more preferably 80 mass% or more, further still more preferably 85 mass% or more, and further still more preferably 90 mass% or more, and 100 mass% or less, from the viewpoint of improving the hydrogen gas barrier property, the pot life, and the shelf life.

### (Epoxy resin curing agent (B2))

The epoxy resin curing agent (B) can further contain an epoxy resin curing agent (B2) as an epoxy resin curing agent other than the resorcinol (B1) as long as the effects of the present invention are not impaired. Examples of the epoxy resin curing agent (B2) include a compound having two or more groups having active hydrogen capable of reacting with an epoxy group in the epoxy resin (A).

The epoxy resin curing agent (B2) preferably contains a phenolic curing agent (B2-1) other than the resorcinol (B1), from the viewpoint of suppressing the reduction in the pot life, shelf life, heat resistance, elongation, and hydrogen gas barrier property.

### [Phenolic curing agent (B2-1) other than resorcinol (B1)]

The phenolic curing agent (B2-1) is only required to be a phenolic compound having two or more phenolic hydroxyl groups, and preferably contains at least one selected from the group consisting of bisphenol F, bisphenol A, novolak type phenol, and triphenylmethane type phenol, and more preferably contains at least one selected from the group consisting of novolak type phenol and triphenylmethane type phenol, from the viewpoint of suppressing the reduction in the pot life, shelf life, heat resistance, elongation, and hydrogen gas barrier property.

Examples of the novolak type phenol used as the phenolic curing agent (B2-1) include phenol novolak, bisphenol A novolak, and cresol novolak, and these can be used alone or in combination of two or more thereof. Among these, the phenolic curing agent (B2-1) is preferably phenol novolak, from the viewpoint of suppressing the reduction in the pot life, shelf life, heat resistance, elongation, and hydrogen gas barrier property.

The triphenylmethane type phenol means a phenolic compound having a triphenylmethane backbone (excluding one corresponding to the epoxy resin (A1)).

A softening point of the novolak type phenol is preferably 70 to 250°C, more preferably 75 to 240°C, still more preferably 75 to 200°C, further still more preferably 75 to 120°C, and further still more preferably 75 to 100°C, from the viewpoint of improving heat resistance. The softening point can be measured by, for example, a thermomechanical analyzer (TMA).

A hydroxyl group equivalent of the phenolic curing agent (B2-1) is usually 90 g/equivalent or more, and preferably 95 g/equivalent or more. From the viewpoint of improving the curability, the hydroxyl group equivalent is preferably 160 g/equivalent or less, more preferably 150 g/equivalent or less, still more preferably 130 g/equivalent or less, and further still more preferably 120 g/equivalent or less.

As the phenolic curing agent (B2-1), commercially available products can also be used. Examples of the novolak type phenol include PHENOLITE series "TD-2131", "TD-2106", "TD-2093Y", and "TD-2090" (phenol novolak), "VH-4150", "VH-4170", and "KH-6021" (bisphenol A novolak), "KA-1160", "KA-1163", and "KA-1165 (cresol novolak), which are available from DIC CORPORATION. Examples of the triphenylmethane type phenol include "S-TPM-105" available from JFE Chemical Corporation.

The epoxy resin curing agent (B2) may contain other epoxy resin curing agents other than the phenolic curing agent (B2-1), such as a dihydrazide curing agent. However, from the viewpoint of suppressing the reduction in the pot life, shelf life, heat resistance, elongation, and hydrogen gas barrier property, a content of the phenolic curing agent (B2-1) in the epoxy resin curing agent (B2) is preferably 70 mass% or more, more preferably 80 mass% or more, still more preferably 90 mass% or more, and further still more preferably 95 mass% or more, and 100 mass% or less.

### <Curing accelerator (C)>

The epoxy resin composition of the present invention preferably further contains a curing accelerator (C), from the viewpoint of improving the curability.

The curing accelerator (C) preferably contains at least one selected from the group consisting of imidazoles, tertiary amines, and phosphorus compounds, from the viewpoint of improving the curability.

Examples of the imidazoles include 1-cyanoethyl-2-ethyl-4-methylimidazole and 2-ethyl-4-methylimidazole.

Examples of the tertiary amines include tertiary amines capable of accelerating curing of the resorcinol (B1) and the phenolic curing agent (B2-1) or salts thereof, such as, 1,8-diazabicyclo[5.4.0]-undecene-7 (DBU), 1,5-diazabicyclo [4.3.0]-nonene-5 (DBN), and tris (dimethylaminomethylphenol).

Examples of the phosphorus compound include phosphine compounds such as triphenylphosphine and phosphonium salts such as tetraphenylphosphonium tetraphenylborate.

One or two or more types of the curing accelerator (C) can be used. From the viewpoint of improving the curability, the curing accelerator (C) preferably contains at least one selected from the group consisting of imidazoles and tertiary amines, more preferably contains imidazoles, and still more preferably contains 2-ethyl-4-methylimidazole.

### <Stress relaxation component (D)>

The epoxy resin composition of the present invention may further contain a stress relaxation component (D) in order to, for example, suppress a rapid increase in the elastic modulus of the cured product and reduce cracking.

Examples of the stress relaxation component (D) include a silicone-based elastomer particle, a butylacrylate-based elastomer particle, a polyether amine-based elastomer particle, and other elastomer particles such as rubber particles. Also, a liquid rubber component such as epoxidized polybutadiene can be used.

Examples of the commercially available product of the stress relaxation component include "Kane Ace" B series, FM series, M series, and MX series available from KANEKA CORPORATION, and "EPOLEAD PB3600" and "EPOLEAD PB4700", which are liquid epoxidized polybutadiene available from DAICEL CORPORATION.

### <Non-reactive diluent (E)>

The epoxy resin composition of the present invention may further contain a non-reactive diluent (E) in order to, for example, improve the easy blendability of the curing accelerator (C) and improve the tensile stress of the cured product. The improvement in the easy blendability of the curing accelerator (C) means that the curing accelerator (C) can be uniformly dissolved or dispersed in the composition even in a small amount by dissolving the curing accelerator (C) in the non-reactive diluent (E) in advance to prepare a solution, and blending the solution into the epoxy resin composition.

Examples of the non-reactive diluent (E) include at least one selected from the group consisting of benzyl alcohol, furfuryl alcohol, tetrahydrofurfuryl alcohol, and an aromatic hydrocarbon formaldehyde resin.

Among those described above, examples of the aromatic hydrocarbon formaldehyde resin include a resin obtained by reacting an aromatic hydrocarbon and formaldehyde, a toluene formaldehyde resin obtained by reacting toluene and formaldehyde, a xylene formaldehyde resin obtained by reacting xylene and formaldehyde, a mesitylene formaldehyde resin obtained by reacting mesitylene and formaldehyde, and a pseudocumene formaldehyde resin obtained by reacting pseudocumene and formaldehyde. Among these, from the viewpoint of improving the easy blendability of the curing accelerator (C), improving the tensile stress of the cured product, and maintaining physical properties of the cured product other than the tensile stress, the aromatic hydrocarbon formaldehyde resin preferably contains the xylene formaldehyde resin.

Examples of the commercially available product of the aromatic hydrocarbon formaldehyde resin include "NIKANOL Y-50", "NIKANOL Y-100", "NIKANOL Y-300", "NIKANOL Y-1000", "NIKANOL L", "NIKANOL LL", "NIKANOL LLL", "NIKANOL G", "NIKANO H", "NIKANOL H-80" which are xylene formaldehyde resins (hereinafter also simply referred to as "xylene resin") available from Fudow Co., Ltd.

Among those described above, from the viewpoint of improving the easy blendability of the curing accelerator (C), improving the tensile stress of the cured product, and maintaining physical properties of the cured product other than the tensile stress, the non-reactive diluent (E) preferably contains at least one selected from the group consisting of benzyl alcohol and the aromatic hydrocarbon formaldehyde resin, and more preferably contains at least one selected from the group consisting of benzyl alcohol and the xylene formaldehyde resin.

### <Solvent>

The epoxy resin composition of the present invention can further contain a solvent, from the viewpoint of reducing the viscosity of the composition to enhance impregnation of the composition into reinforcing fibers. Examples of the solvent include organic solvents other than the non-reactive diluent (E).

Examples of the solvent include alcohol solvents such as methanol, ethanol, 1-propanol, 2-propanol, 1-butanol, 2-butanol, 2-methoxyethanol, 2-ethoxyethanol, 2-propoxyethanol, 2-butoxyethanol, 1-methoxy-2-propanol, 1-ethoxy-2-propanol, and 1-propoxy-2-propanol; ester solvents such as ethyl acetate and butyl acetate; ketone solvents such as acetone, methylethylketone, and methylisobutylketone; ether solvents such as diethyl ether and diisopropyl ether; hydrocarbon solvents such as toluene, and one type or two or more types of these can be used.

From the viewpoint of the solubility of the components contained in the epoxy resin composition and the viewpoint of the ease of removal of the solvent, the solvent is preferably at least one selected from the group consisting of an alcohol-based solvent having 8 or less carbon atoms, an ester-based solvent having 8 or less carbon atoms, a ketone-based solvent having 8 or less carbon atoms, and a hydrocarbon-based solvent having 8 or less carbon atoms, and more preferably at least one selected from the group consisting of methanol, ethanol, 1-propanol, 2-propanol, 1-butanol, 2-butanol, ethyl acetate, methyl ethyl ketone, methyl isobutyl ketone, and toluene.

### <Content>

A content ratio between the epoxy resin (A) and the epoxy resin curing agent (B) in the epoxy resin composition of the present invention is an amount such that a functional group equivalent ratio [(B)/(A)] between the epoxy resin (A) and the epoxy resin curing agent (B) is preferably 0.5 to 2.0, more preferably 0.75 to 1.5, and still more preferably 0.8 to 1.2.

In the present specification, the functional group equivalent ratio [(B)/(A)] means (the number of active hydrogens in the epoxy resin curing agent (B)/the number of epoxy groups in the epoxy resin (A)), unless otherwise specified.

A content of the epoxy resin (A) in the epoxy resin composition is preferably 40 to 95 mass%, more preferably 50 to 90 mass%, still more preferably 60 to 85 mass%, and further still more preferably 65 to 80 mass%.

When the epoxy resin composition contains water or the solvent, the content of the epoxy resin (A) in 100 mass% of the solid content in the epoxy resin composition is preferably 40 to 95 mass%, more preferably 50 to 90 mass%, still more preferably 60 to 85 mass%, and further still more preferably 65 to 80 mass%. The "solid content in the epoxy resin composition" means an amount obtained by subtracting the water and solvent in the epoxy resin composition.

A content of the epoxy resin curing agent (B) in the epoxy resin composition is preferably 5.0 to 60 mass%, more preferably 10 to 50 mass%, still more preferably 15 to 40 mass%, and further still more preferably 20 to 35 mass%.

When the epoxy resin composition contains water or the solvent, the content of the epoxy resin curing agent (B) in 100 mass% of the solid content in the epoxy resin composition is preferably 5.0 to 60 mass%, more preferably 10 to 50 mass%, still more preferably 15 to 40 mass%, and further still more preferably 20 to 35 mass%.

When the epoxy resin composition contains the curing accelerator (C), the content of the curing accelerator (C) in the epoxy resin composition is preferably 0.01 to 10 parts by mass, more preferably 0.01 to 5 parts by mass, still more preferably 0.05 to 1 part by mass, and further still more preferably 0.05 to 0.5 parts by mass, relative to 100 parts by mass of a total amount of the epoxy resin (A) and the epoxy resin curing agent (B),from the viewpoint of improving the curability.

The total content of the epoxy resin (A), the epoxy resin curing agent (B), and the curing accelerator (C) in the epoxy resin composition of the present invention is preferably 70 mass% or more, more preferably 80 mass% or more, still more preferably 90 mass% or more, and further still more preferably 95 mass% or more, and 100 mass% or less, in the epoxy resin composition, from the viewpoint of effectively exhibiting the effects of the present invention. When the epoxy resin composition contains water or the solvent, a total content of the epoxy resin (A), the epoxy resin curing agent (B), and the curing accelerator (C) in 100 mass% of the solid content in the epoxy resin composition is preferably 70 mass% or more, more preferably 80 mass% or more, still more preferably 90 mass% or more, and further still more preferably 95 mass% or more, and 100 mass% or less.

When the epoxy resin composition contains the stress relaxation component (D), a content of the stress relaxation component (D) in the epoxy resin composition is preferably 1.0 to 30 parts by mass, more preferably 3.0 to 20 parts by mass, still more preferably 5.0 to 15 parts by mass, and further still more preferably 8.0 to 12 parts by mass, relative to 100 parts by mass of the total amount of the epoxy resin (A) and the epoxy resin curing agent (B).

When the epoxy resin composition contains the non-reactive diluent (E), a content of the non-reactive diluent (E) in the epoxy resin composition is preferably 0.1 to 20 parts by mass, more preferably 0.2 to 15 parts by mass, still more preferably 0.3 to 10 parts by mass, further still more preferably 0.3 to 7 parts by mass, further still more preferably 0.3 to 5 parts by mass, further still more preferably 0.4 to 3 parts by mass, and further still more preferably 0.5 to 2 parts by mass, relative to 100 parts by mass of the total amount of the epoxy resin (A) and the epoxy resin curing agent (B), from the viewpoint of improving the easy blendability of the curing accelerator (C), improving the tensile stress of the cured product, and maintaining physical properties of the cured product other than the tensile stress.

When the epoxy resin composition contains a solvent, a content thereof is not particularly limited, but is preferably 5 mass% or more, more preferably 10 mass% or more, and still more preferably 15 mass% or more in the epoxy resin composition, from the viewpoint of reducing the viscosity of the epoxy resin composition. From the viewpoint of ease of removal of the solvent, the content is preferably 95 mass% or less, more preferably 90 mass% or less, still more preferably 80 mass% or less, and further still more preferably 70 mass% or less.

The epoxy resin composition of the present invention may be a solvent-free epoxy resin composition. Specifically, the content of the solvent in the epoxy resin composition may be less than 5 mass%, preferably less than 2 mass%, more preferably less than 1 mass%, and still more preferably less than 0.1 mass%.

The epoxy resin composition of the present invention is preferably a nonaqueous epoxy resin composition. Specifically, a content of water in the epoxy resin composition is preferably less than 5 mass%, more preferably less than 2 mass%, still more preferably less than 1 mass%, and further still more preferably less than 0.1 mass%. However, the nonaqueous epoxy resin composition as used herein means an epoxy resin composition having a low amount of water which is intentionally blended, and does not exclude the content of unintentionally incorporated water.

The epoxy resin composition of the present invention may further contain other components such as a filler, a modifying component such as a plasticizer, a flow adjusting component such as a thixotropic agent, a reactive diluent, a pigment, a leveling agent, a tackifier, and a fire retardant depending on the application.

### <Hydrogen gas permeation coefficient>

The cured product of the epoxy resin composition of the present invention exhibits a high hydrogen gas barrier property. A hydrogen gas permeation coefficient at 23°C of the cured product of the epoxy resin composition of the present invention is preferably 7.0 × 10⁻¹¹ [cc·cm/(cm²·s·cmHg)] or less, more preferably 6.0 × 10⁻¹¹ [cc·cm/(cm²·s·cmHg)] or less, still more preferably 5.0 × 10⁻¹¹ [cc·cm/(cm²·s·cmHg)] or less, and further still more preferably 3.5 × 10⁻¹¹ [cc·cm/(cm²·s·cmHg)] or less.

The hydrogen gas permeation coefficient of the cured product of the epoxy resin composition is measured under a drying condition of 23°C (23°C, a humidity of 0%) in accordance with JIS K 7126-1. The hydrogen gas permeability coefficient can be measured by a method which will be described in Examples.

### <Glass transition temperature>

The cured product of the epoxy resin composition of the present invention preferably has a glass transition temperature (Tg) of 100°C or more, more preferably 105°C or more, still more preferably 110°C or more, and further still more preferably 115°C or more, from the viewpoint of high heat resistance. The upper limit of the glass transition temperature is not particularly limited, but may be, for example, 200°C or less.

The glass transition temperature of the cured product of the epoxy resin composition can be specifically measured by the method described in the examples using a dynamic viscoelasticity measuring apparatus.

### <Tensile elongation>

The cured product of the epoxy resin composition of the present invention preferably has a tensile elongation of 3.0% or more, more preferably 3.5% or more, still more preferably 3.8% or more, and further still more preferably 4.0% or more, from the viewpoint of improving the impact resistance. The upper limit of the tensile elongation is not particularly limited, but may be, for example, 10% or less, from the viewpoint of improving mechanical strength.

The tensile elongation of the cured product of the epoxy resin composition can be specifically measured by the method described in the examples in accordance with JIS K 7161-1:2014 and JIS K 7161-2:2014.

### <Pot life>

The epoxy resin composition of the present invention has a long pot life (working life). For example, the pot life of the epoxy resin composition at 23°C is preferably 3 hours or more, more preferably 6 hours or more, still more preferably 12 hours or more, and further still more preferably 24 hours or more. The pot life of the epoxy resin composition can be measured specifically by a method which will be described in Examples.

### <Shelf life>

The epoxy resin composition of the present invention has a long shelf life (storage life). For example, the shelf life of the epoxy resin composition at 0°C is preferably 7 days or more, more preferably 14 days or more, and still more preferably 30 days or more. The shelf life of the epoxy resin composition can be measured specifically by a method which will be described in Examples.

The method for preparing the epoxy resin composition of the present invention is not particularly limited, and the epoxy resin composition can be prepared by mixing the epoxy resin (A), the epoxy resin curing agent (B), and, if necessary, an additional component using known method and apparatus. The order of mixing of the components contained in the epoxy resin composition is also not particularly limited. The epoxy resin composition may be prepared by mixing the component (A1) and the component (A2) constituting the epoxy resin (A) and then mixing them with other components. Alternatively, the epoxy resin composition may be prepared by simultaneously mixing the component (A1), the component (A2) constituting the epoxy resin (A), and other components.

From the viewpoint of avoiding the progress of gelation before use, the components to be contained in the epoxy resin composition are contacted and mixed with each other preferably immediately before use. The temperature when mixing the components to be contained in the epoxy resin composition can be appropriately adjusted depending on the viscosity of the epoxy resin. However, from the viewpoint of suppressing an increase in viscosity, the temperature is preferably 120°C or lower, and more preferably 100°C or lower, and from the viewpoint of miscibility of the epoxy resin, the temperature is preferably 20°C or higher, and more preferably 25°C or higher. The mixing time is preferably in a range of from 0.1 to 15 minutes, more preferably from 0.2 to 10 minutes, and still more preferably from 0.3 to 5 minutes.

### [Cured product]

The cured product of the epoxy resin composition of the present invention (hereinafter, also simply referred to as "cured product of the present invention") is obtained by curing the above-described epoxy resin composition of the present invention by a known method. Conditions for curing the epoxy resin composition are appropriately selected according to the intended use and form, and are not particularly limited.

The form of the cured product of the present invention is also not particularly limited, and can be selected according to the intended use. For example, when the intended use of the epoxy resin composition is a coating material, the cured product of the composition is usually in the form of a film. From the viewpoint of effectively exhibiting the effects of the present invention, the cured product of the present invention is preferably a matrix resin of a fiber-reinforced composite material which will be described below.

### [Prepreg]

The prepreg of the present invention contains the epoxy resin composition and reinforcing fibers. More specifically, the prepreg of the present invention is produced by impregnating reinforcing fibers with the epoxy resin composition.

### <Reinforcing fiber>

Examples of the form of the reinforcing fibers used in the prepreg include short fibers, long fibers, and continuous fibers. Among them, from the viewpoint of using the obtained prepreg to produce a high-pressure gas container by the filament winding process or the tape winding process, long fibers or continuous fibers are preferred, and continuous fibers are more preferred.

Note that, in the present specification, the short fibers refer to fibers having a fiber length of 0.1 mm or more and less than 10 mm, and the long fibers refer to fibers having a fiber length of 10 mm or more and 100 mm or less. The continuous fiber refers to a fiber bundle having a fiber length of more than 100 mm.

Examples of the shape of the continuous fibers include a tow, a sheet, a tape, etc., and examples of the continuous fibers constituting the sheet or the tape include a unidirectional (UD) material, a woven fabric, and a nonwoven fabric.

From the viewpoint of producing a high-pressure gas container by the filament winding process or the tape winding process using a prepreg, the shape of the continuous fibers is preferably a tow or a tape, and more preferably a tow. The number of continuous fiber bundles (the number of filaments) included in the tow is preferably from 3 K to 50 K, and more preferably from 6 K to 40 K from the viewpoint of easiness to obtain a high strength and a high elastic modulus.

In the continuous fiber, an average fiber length of the continuous fiber bundle is not particularly limited, but is preferably from 1 to 10000 m, and more preferably from 100 to 10000 m from the viewpoint of molding processability.

An average fineness of the continuous fiber bundle is preferably from 50 to 2000 tex (g/1000 m), more preferably from 200 to 1500 tex, and still more preferably from 500 to 1500 tex from the viewpoint of molding processability and from the viewpoint of easiness to obtain a high strength and a high elastic modulus.

An average tensile modulus of the continuous fiber bundle is preferably from 50 to 1000 GPa.

Examples of a material for the reinforcing fibers include inorganic fibers such as carbon fibers, glass fibers, basalt fibers, metal fibers, boron fibers, and ceramic fibers; and organic fibers such as aramid fibers, polyoxymethylene fibers, aromatic polyamide fibers, polyparaphenylenebenzobisoxazole fibers, and ultra-high-molecular-weight polyethylene fibers. Among them, inorganic fibers are preferred from the viewpoint of obtaining high strength. The reinforcing fibers are preferably at least one selected from the group consisting of carbon fibers, glass fibers, and basalt fibers from the viewpoint of lightweight, a high strength, and a high elastic modulus, and more preferably carbon fibers from the viewpoint of strength and lightweight.

Examples of the carbon fibers include polyacrylonitrile-based carbon fibers and pitch-based carbon fibers. In addition, carbon fibers made from plant-based raw materials such as lignin and cellulose can also be used.

The reinforcing fibers may be treated with a treatment agent. Examples of the treatment agent include a surface treatment agent or a sizing agent.

The surface treatment agent is preferably a silane coupling agent. Examples of the silane coupling agent include silane coupling agents each having a vinyl group, silane coupling agents each having an amino group, silane coupling agents each having an epoxy group, silane coupling agents each having a (meth)acrylic group, and silane coupling agents each having a mercapto group.

Examples of the sizing agent include urethane-based sizing agents, epoxy-based sizing agents, acrylic-based sizing agents, polyester-based sizing agents, vinyl ester-based sizing agents, polyolefin-based sizing agents, polyether-based sizing agents, and carboxylic acid-based sizing agents, and one type thereof can be used, or two or more types thereof can be used in combination. Examples of combinations of two or more types of the sizing agents include urethane/epoxy-based sizing agents, urethane/acrylic-based sizing agents, and urethane/carboxylic acid-based sizing agents.

From the viewpoint of improving interfacial adhesiveness to the cured product of the epoxy resin composition and further improving the strength, impact resistance of the resultant prepregs and composite materials, the amount of the treatment agent is preferably from 0.001 to 5 mass%, more preferably from 0.1 to 3 mass%, and still more preferably from 0.5 to 2 mass%, relative to the amount of the reinforcing fibers.

A commercially available product can also be used as the reinforcing fibers. Examples of commercially available continuous carbon fibers (tows) include TORAYCA (trade name) YARN such as each series of "T300", "T300B", "T400HB", "T700SC", "T800SC", "T800HB", "T830HB", "T1000GB", "T100GC", "M35JB", "M40JB", "M46JB", "M50JB", "M55J", "M55JB", "M60JB", "M30SC", and "Z600", which are available from Toray Industries, Inc.; TENAX (trade name) such as "HTA40" series, "HTS40" series, "HTS45" series, "HTS45P12" series, "STS40" series, "UTS50" series, "ITS50" series, "ITS55" series, "IMS40" series, "IMS60" series, "IMS65" series, "IMS65P12" series, "HMA35" series, "UMS40" series, "UMS45" series, "UMS55" series, and "HTS40MC" series, which are available from TEIJIN LIMITED; and carbon fiber tows such as PYROFIL (trade name) "HT", "IM", and "HM" series, GRAFIL (trade name) "HT" series, and "DIALEAD"(trade name) series, which are available from Mitsubishi Chemical Corporation.

Furthermore, examples of commercially available continuous carbon fibers other than tows include carbon fiber fabrics such as TORAYCA (trade name) CLOTH "CO6142", "CO6151B", "CO6343", "CO6343B", "CO6347B", "CO6644B", "CK6244C", "CK6273C", "CK6261C", "UT70" series, "UM46" series, "BT70" series, "T300" series, "T300B" series, "T400HB" series, "T700SC" series, "T800SC" series, "T800HB" series, "T1000GB" series, "M35JB" series, "M40JB" series, "M46JB" series, "M50JB" series, "M55J" series, "M55JB" series, "M60JB" series, "M30SC" series, "Z600GT" series, which are available from Toray Industries, Inc.; and carbon fiber fabrics such as PYROFIL (trade name) "TR3110M", "TR3523M", "TR3524M", "TR6110HM", "TR6120HM", "TRK101M", "TRK510M", "TR3160TMS", "TRK979PQRW", "TRK976PQRW", "TR6185HM" and "TRK180M", which are available from Mitsubishi Chemical Corporation.

### <Content>

From the viewpoint of producing the prepreg with a high strength and a high elastic modulus, a content of the reinforcing fibers in the prepreg of the present invention is in a range in which a volume fraction of the reinforcing fibers in the prepreg is preferably in a range of 0.10 or more, more preferably 0.20 or more, still more preferably 0.30 or more, and further still more preferably 0.40 or more. In addition, from the viewpoints of the hydrogen gas barrier property, impact resistance, and molding processability, the volume fraction of the reinforcing fibers is preferably in a range of 0.85 or less, more preferably 0.80 or less, and still more preferably 0.70 or less.

A volume fraction Vf₁ of the reinforcing fibers in the prepreg can be calculated from the following equation. 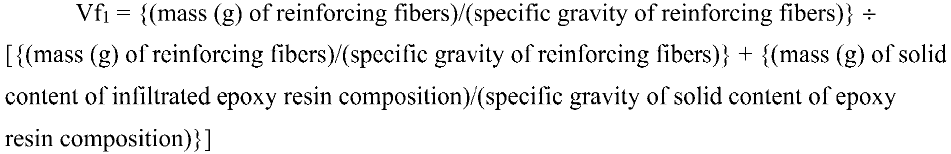 Vf1 = {(mass (g) of reinforcing fibers)/(specific gravity of reinforcing fibers)} ÷ [{(mass (g) of reinforcing fibers)/(specific gravity of reinforcing fibers)} + {(mass (g) of solid content of infiltrated epoxy resin composition)/(specific gravity of solid content of epoxy resin composition)}]

From the viewpoint of obtaining the effect of the present invention, the total content of the solid content and the reinforcing fibers in the epoxy resin composition constituting the prepreg of the present invention is preferably 70 mass% or more, more preferably 80 mass% or more, still more preferably 90 mass% or more, and 100 mass% or less.

### <Shape of prepreg and method for producing prepreg>

The shape of the prepreg varies depending on the form of the reinforcing fibers used as well, but from the viewpoint of producing a high-pressure gas container by the filament winding process or the tape winding process, the prepreg of the present invention is preferably a tow prepreg or a tape prepreg.

Among tape prepregs, the prepreg of the present invention is preferably a uni-directional (UD) tape. The uni-directional tape (hereinafter also referred to as "UD tape") is suitably used particularly in the tape winding process. The UD tape may be cut and used as a small piece.

In addition, when continuous fibers in the form of a uni-directional (UD) material, a woven fabric, a nonwoven fabric, etc. are used, a sheet-shaped prepreg can also be used.

A method for producing the prepreg is not particularly limited, and the prepreg can be produced according to a known method. For example, a prepreg can be obtained by impregnating reinforcing fibers with an epoxy resin composition containing an epoxy resin (A), an epoxy resin curing agent (B), and other components used if necessary, and subjecting the impregnated reinforcing fibers to drying to remove the solvent.

A method for impregnating the reinforcing fibers with the epoxy resin composition is not particularly limited, and a known method can be appropriately used depending on the form of the reinforcing fibers, or the like. For example, in the case of producing a tow prepreg, a method including immersing a continuous fiber bundle unwound from a roll in a resin bath filled with the epoxy resin composition described above, impregnating the continuous fiber bundle with the composition, and then pulling up the continuous fiber bundle from the resin bath can be exemplified. Thereafter, removing the excess epoxy resin composition using a drawing roll or the like may be performed.

The impregnation with the epoxy resin composition may be performed under a pressurized condition, or a reduced pressure condition, if necessary.

Next, if necessary, the reinforcing fibers impregnated with the epoxy resin composition are subjected to the drying to remove the solvent. The drying conditions in the drying are not particularly limited, but are preferably conditions under which the solvent can be removed and curing of the epoxy resin composition does not excessively proceed. From this viewpoint, for example, a drying temperature can be selected in a range of from 30 to 120°C, and a drying time can be selected in a range of from 10 seconds to 5 minutes.

The prepreg obtained through the drying may be wound once, etc. to form a prepreg product, or may be continuously subjected to the production of a fiber-reinforced composite material after being subjected to the drying without being wound, etc. In particular, in the case of producing a tape-shaped or sheet-shaped prepreg product, the prepreg is preferably wound into a roll-shaped product.

### [Fiber-reinforced composite material]

The fiber-reinforced composite material (FRP, hereinafter also simply referred to as "composite material") of the present invention is a cured product of the prepreg, and contains a cured product of the epoxy resin composition and reinforcing fibers. The fiber-reinforced composite material of the present invention contains a cured product of the epoxy resin composition and thus has a high hydrogen barrier property. The prepreg, the epoxy resin composition, the reinforcing fibers, and preferred aspects thereof used in the production of the composite material are the same as those described above.

From the viewpoint of obtaining a high strength and a high elastic modulus, the content of the reinforcing fibers in the fiber-reinforced composite material is in a range such that the volume fraction of the reinforcing fibers in the fiber-reinforced composite material is preferably 0.10 or more, more preferably 0.20 or more, still more preferably 0.30 or more, and further still more preferably 0.40 or more. In addition, from the viewpoints of the hydrogen gas barrier property, impact resistance, and molding processability, the volume fraction of the reinforcing fibers is preferably in a range of 0.85 or less, more preferably 0.80 or less, and still more preferably 0.70 or less.

The volume fraction Vf of the reinforcing fibers in the fiber-reinforced composite material can be calculated from the following equation. 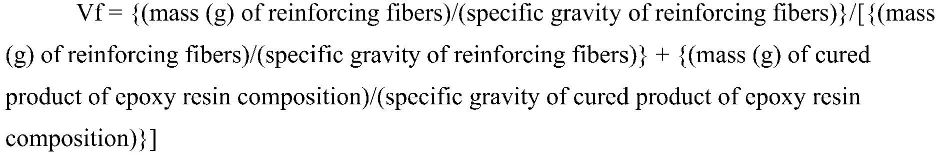 Vf = {(mass (g) of reinforcing fibers)/(specific gravity of reinforcing fibers)}/[{(mass (g) of reinforcing fibers)/(specific gravity of reinforcing fibers)} + {(mass (g) of cured product of epoxy resin composition)/(specific gravity of cured product of epoxy resin composition)}]

### <Method for producing fiber-reinforced composite material>

The composite material can be produced by pre-molding the prepreg so as to have a desired shape, and then curing the prepreg. For example, when the composite material of the present invention is applied to a molded body having a hollow shape such as a pipe, a shaft, a gas cylinder, or a tank, a composite material can be produced by molding a tow prepreg by the filament winding process, the braiding process, the 3D printer process, or the like.

In the filament winding process, specifically, a tow prepreg is wound around an outer surface of a balloon, a mandrel, or a liner, and then cured by heating, whereby a composite material having a desired shape can be produced.

In the braiding process, for example, a balloon or a mandrel is used to form a prepreg by braiding a tow prepreg with a braider in one direction or in a braid structure, and then curing of the prepreg by heating is performed. In the braiding process, a tow prepreg may be braided and molded without using a balloon or a mandrel.

When a sheet-shaped prepreg such as a uni-directional (UD) material, a woven fabric, or a nonwoven fabric is used, a composite material can be produced by one prepreg or stacking a plurality of prepregs and placing the prepreg(s) in a mold, and curing the prepreg(s) by heating under a vacuum condition, or a pressurized condition.

A method for curing the prepreg in the production of the composite material is also not particularly limited, and is conducted by a known method at a temperature and for a time sufficient to cure the epoxy resin composition contained in the prepreg. Conditions for curing the prepreg depend on, for example, the thicknesses of the prepreg and the composite material to be formed. For example, a curing temperature can be selected in a range of from 10 to 180°C and a curing time can be selected in a range of from 5 minutes to 200 hours. From the viewpoint of productivity, the curing temperature is preferably in a range of from 80 to 180°C and the curing time is preferably in a range of from 10 minutes to 5 hours.

The composite material of the present invention is preferably used for a molded body having a hollow shape such as a pipe, a shaft, a gas cylinder, a tank, or a cylinder (a circular cylinder whose both ends are closed by two discs) from the viewpoint of production using a tow prepreg. Since the composite material is excellent in a hydrogen gas barrier property, it is particularly preferable as a material for forming a high-pressure gas container.

### [High-pressure gas container]

The high-pressure gas container of the present invention contains the fiber-reinforced composite material. The high-pressure gas container of the present invention needs to be configured such that at least a part thereof is made of the fiber-reinforced composite material. For example, in the case of a high-pressure gas container having a liner and an outer layer provided so as to cover the outer surface of the liner, examples thereof include a high-pressure gas container in which at least one of the liner and the outer layer is made of the fiber-reinforced composite material. In the case of a linerless high-pressure gas container, examples thereof include the entire container is made of the fiber-reinforced composite material.

Specific aspects of the high-pressure gas container containing the fiber-reinforced composite material include, for example, (1) a configuration including: a metallic liner; and an outer layer made of the fiber-reinforced composite material of the present invention, (2) a configuration including: a resin liner; and an outer layer made of the fiber-reinforced composite material of the present invention, (3) a configuration including: a liner made of the fiber-reinforced composite material of the present invention; and an outer layer made of a material other than the fiber-reinforced composite material, and (4) a configuration of only a (linerless) container made of the fiber-reinforced composite material of the present invention.

As the metal used in the "metallic liner" in the aspect (1), examples thereof include light alloys such as aluminum alloys and magnesium alloys.

The resin used for the "resin liner" in the aspect (2) is not particularly limited as long as it is a resin excellent in a hydrogen gas barrier property and pressure resistance, and examples thereof include thermoplastic resins, cured products of thermosetting resins, and cured products of photocurable resins. Among them, a thermoplastic resin is preferred from the viewpoint of enabling easy molding of the liner.

Examples of the thermoplastic resin include polyamide resins, polyester resins, polyolefin resins, polyimide resins, polycarbonate resins, polyetherimide resins, polyamideimide resins, polyphenylene etherimide resin, polyphenylene sulfide resins, polysulfone resins, polyethersulfone resins, polyarylate resins, liquid crystal polymers, polyetheretherketone resins, polyetherketone resins, polyetherketoneketone resins, polyetheretherketoneketone resins, and polybenzimidazole resins, and one type thereof can be used, or two or more types thereof can be used in combination.

From the viewpoint of a hydrogen gas barrier property and pressure resistance, at least one selected from the group consisting of polyamide resins and polyolefin resins is preferred among the thermoplastic resins, and a polyamide resin is more preferable.

Besides, from the viewpoint of enhancing impact resistance, the resin liner may contain the above-described stress relaxation component.

As the "outer layer made of a material other than the fiber-reinforced composite material" in the aspect (3), preferable examples thereof include an outer layer composed of a fiber-reinforced composite material other than the fiber-reinforced composite material of the present invention from the viewpoint of improved reinforcement.

In the aspects (1) to (3), the outer layer can be formed so as to cover the outer surface of the main body portion of the liner without any gaps.

The outer layer may be provided directly on the outer surface of the liner. Alternatively, one or two or more additional layers may be provided on the outer surface of the liner, and the outer layer may be provided on the surface of the additional layer. For example, an adhesive layer may be provided between the liner and the outer layer in order to improve adhesion between the liner and the outer layer.

In a case where the high-pressure gas container is of the aspect (1) or (2), the thickness of the outer layer made of the fiber-reinforced composite material of the present invention can be appropriately selected according to the capacity, shape, and other properties of the high-pressure gas container. The thickness of the outer layer is preferably 100 µm or more, more preferably 200 µm or more, and still more preferably 400 µm or more from the viewpoint of imparting a high hydrogen gas barrier property and impact resistance, and is preferably 80 mm or less, and more preferably 60 mm or less from the viewpoint of reducing the size and weight of the high-pressure gas storage tank.

In a case where the high-pressure gas container is of the aspect (3), the thickness of the liner made of the fiber-reinforced composite material of the present invention can be appropriately selected according to the capacity, shape, and other properties of the high-pressure gas container. The thickness of the liner is preferably 100 µm or more, more preferably 200 µm or more, and still more preferably 400 µm or more from the viewpoint of a hydrogen gas barrier property and pressure resistance, and is preferably 60 mm or less, and more preferably 40 mm or less from the viewpoint of miniaturization and weight reduction of the high-pressure gas container.

In a case where the high-pressure gas container is of the aspect (4), the thickness of the container made of the fiber-reinforced composite material of the present invention can be appropriately selected according to the capacity, shape, and other properties of the high-pressure gas container. The thickness of the container is preferably 1 mm or more, more preferably 2 mm or more, and still more preferably 5 mm or more from the viewpoint of a hydrogen gas barrier property and pressure resistance, and is preferably 80 mm or less, and more preferably 60 mm or less from the viewpoint of miniaturization and weight reduction of the high-pressure gas container.

From the viewpoint of obtaining a high strength and a high elastic modulus, the content of the reinforcing fibers in the liner, the outer layer, or the high-pressure gas container made of the fiber-reinforced composite material of the present invention is in a range that makes the volume fraction of the reinforcing fibers preferably 0.10 or more, more preferably 0.20 or more, still more preferably 0.30 or more, and further still more preferably 0.40 or more. In addition, from the viewpoints of a hydrogen gas barrier property, impact resistance, and molding processability, the content of the reinforcing fibers is preferably in a range that makes the volume fraction of the reinforcing fibers 0.85 or less, more preferably 0.80 or less, still more preferably 0.75 or less, and further still more preferably 0.70 or less.

The volume fraction of the reinforcing fibers can be calculated by the same method as described above.

Among those described above, the high-pressure gas container is preferably of any of the aspects (2), (3), and (4), and more preferably of the aspect (3) or (4) from the viewpoint of lightweight and the viewpoint of high barrier properties against hydrogen required for the fiber-reinforced composite material.

Note that the high-pressure gas container may further include parts, such as a connector and a valve, which are made of a material other than the fiber-reinforced composite material. Furthermore, an optional layer such as a protective layer, a coating layer, and an antirust-containing layer may be formed on the surface of the high-pressure gas container.

The gas to be stored in the high-pressure gas container needs to be in gaseous state at 25°C and 1 atm, and examples thereof include oxygen, carbon dioxide, nitrogen, argon, LPG, a substitute for CFCs, and methane, besides hydrogen. Among them, hydrogen is preferred from the viewpoint of the effectiveness of the present invention.

### <Method for producing high-pressure gas container>

As a method for producing the high-pressure gas container of the present invention, the production method described in the method for producing a fiber-reinforced composite material described above can be appropriately used depending on the form of the reinforcing fibers or the prepreg to be used. When a tow prepreg is used to manufacture a high-pressure gas container, the high-pressure gas container can be produced by molding the tow prepreg by the filament winding process, the braiding process, the 3D printer method, or the like.

In a case where the high-pressure gas container is of the aspect (1) or (2), a tow prepreg is wound so as to cover an outer surface of a metallic or resin liner using the filament winding process, and then heated and cured to form an outer layer made of a fiber-reinforced composite material, whereby the high-pressure gas container can be produced.

In a case where the high-pressure gas container is of the aspect (3) or (4), a tow prepreg can be formed into a container shape by the filament winding process, the braiding process, the 3D printer process, or the like, and then heated and cured to manufacture a high-pressure gas container.

### Examples

Hereinafter, the present invention will be described in detail with reference to Examples and Comparative Examples, but the present invention is not limited to the following Examples. Note that the measurements and evaluations in the present Examples were performed by the following methods.

### <Hydrogen gas permeation coefficient [cc·cm/(cm²·s·cmHg)>

The epoxy resin composition prepared in each example was poured into a mold (120 mm × 120 mm × 1 mm) coated with a release agent ("Chemlease AF-7 EZ" available from Chem-Trend Japan K. K.), and heated and cured under a condition of from 80 to 160°C for 2 hours to prepare a plate-shaped molded body having a thickness of 1 mm. A circular test piece having a thickness of 1 mm and a diameter of 20 mm was prepared from the plate-shaped molded body. For the test piece, the hydrogen gas permeation coefficient [cc·cm/(cm²·s·cmHg)] at 23°C was measured by a differential pressure method according to JIS K 7126-1:2006 (23°C, a humidity of 0%) using a gas permeability measuring apparatus ("GTR-30X" available from GTR Tec Corporation).

### <Glass transition temperature (Tg)>

The epoxy resin composition prepared in each example was molded so as to be a flat plate of 200 mm × 200 mm × 2 mm in thickness, and heated and cured at 120°C for 30 minutes and further at 160°C for 2 hours to prepare a cured product. A rectangular piece having a size of 50 mm × 10 mm × 2 mm in thickness was cut out from the cured product and used as a dynamic viscoelasticity (DMA) measurement sample.

Using the sample, DMA flexural measurement was performed with a rotational rheometer "ARES G2" (available from TA Instruments) under the following conditions. A peak top value of tanδ when tanδ was plotted on the ordinate and the measurement temperature on the abscissa was used as Tg of the cured product. The higher the glass transition temperature (Tg) of the cured product, the better the heat resistance.

### (Measurement conditions)

Measurement mode: flexural DMA measurement
Measurement temperature: from 30 to 180°C
Temperature rising rate: 5°C/minute

### <Tensile stress, tensile elongation, and tensile elastic modulus>

The epoxy resin composition prepared in each example was molded so as to be a flat plate of 200 mm × 200 mm × 2 mm in thickness, and heated and cured at 120°C for 30 minutes and further at 160°C for 2 hours to prepare a cured product. A rectangular piece having a size of 180 mm × 15 mm × 2 mm in thickness was cut out from the cured product and used as a tensile test piece.

Using the test piece, a tensile test (N = 3) was performed with a precision universal tester ("AUTOGRAPH AGX-plus" available from SHIMADZU CORPORATION) in accordance with JIS K 7161-1:2014 and JIS K 7161-2:2014 under the following conditions, and the tensile stress, tensile elongation, and tensile elastic modulus were calculated based on the following equations. A length of the test piece at the time of rupture was calculated from an amount of displacement of a load cell at the time of rupture.

### (Measurement conditions)

Distance between gripping tools: 115 mm
Distance between marked lines: 75 mm
Load cell (tensile force): 1 kN
Tensile rate: 1 mm/minute (tensile direction: longitudinal direction of test piece) (Equation) 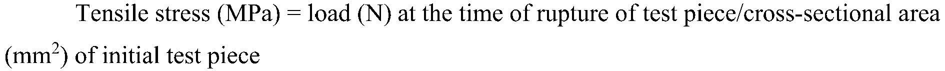 Tensile stress (MPa) = load (N) at the time of rupture of test piece/cross-sectional area (mm2) of initial test piece 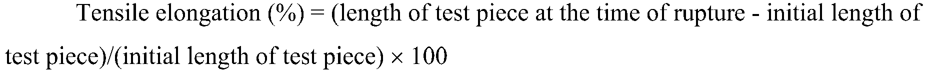 Tensile elongation (%) = (length of test piece at the time of rupture - initial length of test piece)/(initial length of test piece) × 100 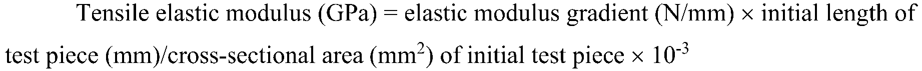 Tensile elastic modulus (GPa) = elastic modulus gradient (N/mm) × initial length of test piece (mm)/cross-sectional area (mm2) of initial test piece × 10-3

The elastic modulus gradient as used herein means a gradient of a stress-strain curve corresponding to between two points where the tensile strains (the value obtained by dividing the amount of the distance between marked lines increased by the distance between marked lines) were 0.05% and 0.25%.

### <Pot life>

The initial viscosity at 23°C of the epoxy resin composition prepared in each example was measured, and 10 g of the epoxy resin composition was then placed in a plastic cup (diameter: 46 mm) and stored at 23°C. The time [h] at which the viscosity of the epoxy resin composition reached at least twice the initial viscosity was determined and shown in the table. In the table, those having a pot life exceeding 24 hours are indicated as "> 24". The longer the time, the better the pot life.

The viscosity of the epoxy resin composition was measured with a rotational rheometer "ARES G2" (available from TA Instruments) in measurement mode: revolution mode using a 25-mm circular plate.

### <Shelf life>

Ten (10) g of the epoxy resin composition prepared in each example was put in a plastic cup (diameter: 46 mm) and stored at 0°C. The epoxy resin composition was brought back to room temperature (23°C) at a certain interval, the fluidity was visually observed, and the number of days [day] until the composition lost its fluidity during the storage at 0°C was shown in the table. In the table, those having a shelf life exceeding 30 days are indicated as "> 30". The longer the time, the better the shelf life.

### Example 1 (preparation and evaluation of epoxy resin composition)

As the epoxy resin (A), triphenylmethane type epoxy resin ("HP-7241" available from DIC CORPORATION, epoxy equivalent: 172 g/equivalent) serving as the component (A1), and bisphenol A diglycidyl ether ("jER828" available from Mitsubishi Chemical Corporation, epoxy equivalent: 186 g/equivalent), a phenol novolak type epoxy resin ("N730A" available from DIC CORPORATION, epoxy equivalent: 176 g/equivalent), and a phenol novolak type epoxy resin ("N740" available from DIC CORPORATION, epoxy equivalent: 183 g/equivalent) serving as the component (A2) were used, and as the epoxy resin curing agent (B), resorcinol serving as the component (B1) was used. Furthermore, as the curing accelerator (C), 2-ethyl-4-methylimidazole (available from Tokyo Chemical Industry Co., Ltd.) was used. These were blended and mixed in mass parts shown in Table 1 to obtain an epoxy resin composition. The functional group equivalent ratio [(B)/(A)] between the epoxy resin (A) and the epoxy resin curing agent (B) was 1/1.

The resultant epoxy resin composition was evaluated by the above-described method. The results are presented in Table 1.

### Examples 2 to 13, and Comparative Examples 1 to 5

An epoxy resin composition was prepared and evaluated by the same method as in Example 1 except that the types and blending amounts of the epoxy resin (A), the epoxy resin curing agent (B), and the curing accelerator (C) were changed as shown in Tables 1 to 3. The results are presented in Table 1 to 3.

### Examples 14 to 15

An epoxy resin composition was prepared and evaluated by the same method as in Example 1 except that the types and blending amounts of the epoxy resin (A), the epoxy resin curing agent (B), and the curing accelerator (C) were changed as shown in Table 2, and that the components shown in Table 2 were also blended and mixed as the stress relaxation component (D) when these components were blended. The results are presented in Table 2.

### Examples 16 to 17

An epoxy resin composition was prepared and evaluated by the same method as in Example 1 except that the types and blending amounts of the epoxy resin (A), the epoxy resin curing agent (B), and the curing accelerator (C) were changed as shown in Table 2, a solution in which the curing accelerator (C) was dissolved in the non-reactive diluent (E) described in Table 2 was prepared, and the epoxy resin (A) and the epoxy resin curing agent (B) were mixed with the solution. The results are presented in Table 2.

### [Table 1]

**Table 1**

| (Parts by mass) | | | | Functional group equivalent (g/eq) | Examples | | | | | | | | |
|---|---|---|---|---|---|---|---|---|---|---|---|---|---|
| | | | | | 1 | 2 | 3 | 4 | 5 | 6 | 7 | 8 | 9 |
| Epoxy resin composition | (A) | Epoxy resin | (A1-1) Triphenylmethane type epoxy resin (HP-7241) | 172 | 5.0 | 10.0 | 20.0 | 20.0 | 20.0 | 20.0 | 10.0 | 5.0 | 5.0 |
| | | | (A2-1-1) Bisphenol F diglycidyl ether (iER807) | 168 | | | 10.0 | | | | | | |
| | | | (A2-1-2) Bisphenol F dielycidyl ether oligomer (iER4005P) | 1026 | | | 5.0 | 5.0 | 5.0 | 5.0 | 5.0 | 5.0 | 10.0 |
| | | | (A2-2-1) Bisphenol A diglycidyl ether (jER828) | 186 | 10.0 | 10.0 | | | | | | | |
| | | | (A2-2-2) Bisphenol A dialycidyl ether oligomer (jER1001) | 483 | | 5.0 | | | | | | | |
| | | | (A2-3-1) Phenol novolak type epoxy resin (N730A) | 176 | 25.0 | 19.5 | | | | | | | |
| | | | (A2-3-2) Phenol novolak type epoxy resin (N740) | 183 | 37.4 | 32.1 | 42.3 | 52.5 | 42.6 | 32.7 | 32.9 | 33.1 | 29.0 |
| | | | (A2-3-3) Phenol novolak type epoxy resin (N770) | 188 | | | | | 10.0 | 20.0 | 30.0 | 35.0 | 35.0 |
| | | | (A2-4-1) Nephthalene epoxy resin(HP-4032SS) | 142 | | | | | | | | | |
| | (B) | Epoxy resin curing agent | (B1) Resorcinol | 55 | 22.6 | 23.4 | 22.7 | 22.5 | 22.4 | 22.3 | 22.1 | 21.9 | 21.0 |
| | | | (B2-1-1) Triphenylmethane type phenol | 99 | | | | | | | | | |
| | | | (B2-1-2) Novolak type phenol | 104 | | | | | | | | | |
| | (C) | Curing accelerator | 2-Ethyl-4-methylimidazole | - | 0.1 | 0.1 | 0.1 | 0.1 | 0.1 | 0.1 | 0.1 | 0.1 | 0.1 |
| | (D) | Stress relaxation component | Kane Ace MX-136 | - | | | | | | | | | |
| | | | EPOLEAD PB4700 | - | | | | | | | | | |
| Functional group equivalent ratio r(B)/(A)] between component (A) and component (B) | | | | | 1.0 | 1.0 | 1.0 | 1.0 | 1.0 | 1.0 | 1.0 | 1.0 | 1.0 |
| Epoxy equivalent of epoxy resin (A) (g/eq) | | | | | 180.3 | 187.5 | 187.7 | 189.9 | 190.6 | 191.3 | 193.6 | 194.8 | 206.0 |
| Epoxy equivalent of epoxy resin (A2) (g/eq) | | | | | 180.9 | 190.1 | 193.9 | 197.1 | 198.0 | 199.0 | 197.3 | 196.5 | 208.8 |
| Content of (A1) in epoxy resin (A) (mass%) | | | | | 6.5 | 13.1 | 25.9 | 25.8 | 25.8 | 25.7 | 12.8 | 6.4 | 6.3 |
| Content of (A2) in epoxy resin (A) (mass%) | | | | | 93.5 | 86.9 | 74.1 | 74.2 | 74.2 | 74.3 | 87.2 | 93.6 | 93.7 |
| Content of (A2-1) in epoxy resin (A2) (mass%) | | | | | 0 | 0 | 26.2 | 8.7 | 8.7 | 8.7 | 7.4 | 6.8 | 13.5 |
| Content of (A2-2) in epoxy resin (A2) (mass%) | | | | | 13.8 | 22.5 | 0 | 0 | 0 | 0 | 0 | 0 | 0 |
| Content of (A2-3) in epoxy resin (A2) (mass%) | | | | | 86.2 | 77.5 | 73.8 | 91.3 | 91.3 | 91.3 | 92.6 | 93.2 | 86.5 |
| Content of (A2-4) in epoxy resin (A2) (mass%) | | | | | 0 | 0 | 0 | 0 | 0 | 0 | 0 | 0 | 0 |
| Content of (B1) in epoxy resin curing agent (B) (mass%) | | | | | 100.0 | 100.0 | 100.0 | 100.0 | 100.0 | 100.0 | 100.0 | 100.0 | 100.0 |
| (A) content in epoxy resin composition (mass%) | | | | | 77.3 | 76.5 | 77.2 | 77.4 | 77.5 | 77.6 | 77.8 | 78.0 | 78.9 |
| (B) content in epoxy resin composition (mass%) | | | | | 22.6 | 23.4 | 22.7 | 22.5 | 22.4 | 22.3 | 22.1 | 21.9 | 21.0 |
| Evaluation results | | Hydrogen gas permeation coefficient (× 10⁻¹¹ cc·cm/cm²·sec·cmHg) | | | 4.4 | 4.9 | 3.2 | 3.5 | 3.4 | 3.5 | 3.3 | 3.8 | 3.4 |
| | | Glass transition temperature (Tg) (°C) | | | 135.6 | 138.6 | 106.0 | 113.4 | 121.3 | 126.7 | 123.5 | 122.1 | 117.4 |
| | | Tensile stress (MPa) | | | 90.1 | 90.6 | 86.4 | 86.4 | 91.1 | 92.8 | 91.5 | 90.0 | 93.0 |
| | | Tensile elongation (%) | | | 3.4 | 3.4 | 4.1 | 4.7 | 3.9 | 4.6 | 4.3 | 3.9 | 4.2 |
| | | Tensile elastic modulus (GPa) | | | 3.5 | 3.4 | 3.4 | 3.4 | 3.5 | 3.5 | 3.5 | 3.5 | 3.5 |
| | | Pot life (h) | | | >24 | >24 | >24 | >24 | >24 | >24 | >24 | >24 | >24 |
| | | Shell life (dav) | | | >30 | >30 | >30 | >30 | >30 | >30 | >30 | >30 | >30 |

### [Table 2]

**Table 2**

| (Parts by mass) | | | | Functional group equivalent (g/eq) | Examples | | | | | | | |
|---|---|---|---|---|---|---|---|---|---|---|---|---|
| | | | | | 10 | 11 | 12 | 13 | 14 | 15 | 16 | 17 |
| Epoxy resin composition | (A) | Epoxy resin | (A1-1) Triphenylmethane type epoxy resin (HP-7241) | 172 | 35.0 | 10.0 | 20.0 | 10.0 | 15.0 | 15.0 | 20.0 | 20.0 |
| | | | (A2-1-1) Bisphenol F diglycidyl ether (jER807) | 168 | 15.0 | 15.0 | 10.0 | | | | | |
| | | | (A2-1-2) Bisphenol F diglycidyl ether oligomer (jER4005P) | 1026 | | | 5.0 | 5.0 | | | 5.0 | 5.0 |
| | | | (A2-2-1) Bisphenol A diglycidyl ether (jER828) | 186 | | | | | | | | |
| | | | (A2-2-2) Bisphenol A diglycidyl ether oligomer (jER1001) | 483 | | | | | | | | |
| | | | (A2-3-1) Phenol novolak type epoxy resin (N730A) | 176 | 10.0 | 5.0 | 15.0 | 34.0 | 20.0 | 20.0 | | |
| | | | (A2-3-2) Phenol novolak type epoxy resin (N740) | 183 | 16.0 | 36.5 | 25.0 | 21.4 | 33.8 | 33.8 | 32.7 | 32.7 |
| | | | (A2-3-3) Phenol novolak type epoxy resin (N770) | 188 | | | | | | | 20.0 | 20.0 |
| | | | (A2-4-1) Naphthalene epoxy resin (HP-4032SS) | 142 | | 10.0 | | | | | | |
| | (B) | Epoxy resin curing agent | (B1) Resorcinol | 55 | 24.0 | 23.5 | 20.0 | 10.2 | 21.2 | 21.2 | 22.3 | 22.3 |
| | | | (B2-1-1) Triphenylmethane type phenol | 99 | | | 5.0 | | | | | |
| | | | (B2-1-2) Novolak type phenol | 104 | | | | 19.4 | | | | |
| | (C) | Curing accelerator | 2-Ethyl-4-methylimidazole | - | 0.1 | 0.1 | 0.1 | 0.1 | 0.1 | 0.1 | 0.1 | 0.1 |
| | (D) | Stress relaxation component | Kane Ace MX-136 | - | | | | | 10.0 | | | |
| | | | EPOLEAD PB4700 | - | | | | | | 10.0 | | |
| | (E) | Non-reactive diluent | Xylene resin | - | | | | | | | 0.9 | |
| | | | Benzyl alcohol | - | | | | | | | | 0.9 |
| Functional group equivalent ratio [(B)/(A)] between component (A) and component (B) | | | | | 1.0 | 1.0 | 1.0 | 1.0 | 1.0 | 1.0 | 1.0 | 1.0 |
| Epoxy equivalent of epoxy resin (A) (g/eq) | | | | | 173.9 | 171.6 | 186.3 | 188.7 | 178.4 | 178.4 | 191.3 | 191.3 |
| Epoxy equivalent of epoxy resin (A2) (g/eq) | | | | | 175.6 | 171.6 | 192.1 | 191.7 | 180.3 | 180.3 | 199.0 | 199.0 |
| Content of (A1) in epoxy resin (A) (mass%) | | | | | 46.1 | 13.1 | 26.7 | 14.2 | 21.8 | 21.8 | 25.7 | 25.7 |
| Content of (A2) in epoxy resin (A) (mass%) | | | | | 53.9 | 86.9 | 73.3 | 85.8 | 78.2 | 78.2 | 74.3 | 74.3 |
| Content of (A2-1) in epoxy resin (A2) (mass%) | | | | | 36.6 | 22.6 | 27.3 | 8.3 | 0 | 0 | 8.7 | 8.7 |
| Content of (A2-2) in epoxy resin (A2) (mass%) | | | | | 0 | 0 | 0 | 0 | 0 | 0 | 0 | 0 |
| Content of (A2-3) in epoxy resin (A2) (mass%) | | | | | 63.4 | 62.4 | 72.7 | 91.7 | 100.0 | 100.0 | 91.3 | 91.3 |
| Content of (A2-4) in epoxy resin (A2) (mass%) | | | | | 0 | 15.0 | 0 | 0 | 0 | 0 | 0 | 0 |
| Content of (B1) in epoxy resin curing agent (B) (mass%) | | | | | 100.0 | 100.0 | 80.0 | 34.5 | 100.0 | 100.0 | 100.0 | 100.0 |
| (A) content in epoxy resin composition (mass%) | | | | | 75.9 | 76.4 | 74.9 | 70.3 | 68.7 | 68.7 | 76.9 | 76.9 |
| (B) content in epoxy resin composition (mass%) | | | | | 24.0 | 23.5 | 25.0 | 29.6 | 21.2 | 21.2 | 22.1 | 22.1 |
| Evaluation results | | Hydrogen gas permeation coefficient (× 10⁻¹¹ cc·cm/cm²·sec·cmHg) | | | 3.2 | 3.1 | 3.3 | 4.6 | 4.1 | 4.6 | 4.1 | 4.1 |
| | | Glass transition temperature (Tg) (°C) | | | 142.0 | 134.1 | 114.8 | 124.3 | 112.1 | 105.4 | 123.5 | 122.8 |
| | | Tensile stress (MPa) | | | 87.2 | 88.2 | 91.3 | 87.6 | 73.7 | 79.8 | 97.7 | 96.4 |
| | | Tensile elongation (%) | | | 3.3 | 3.4 | 3.7 | 3.4 | 3.8 | 4.3 | 4.8 | 4.3 |
| | | Tensile elastic modulus (GPa) | | | 3.4 | 3.6 | 3.7 | 3.5 | 2.8 | 3.3 | 3.9 | 3.5 |
| | | Pot life (h) | | | >24 | >24 | >24 | >24 | >24 | >24 | >24 | >24 |
| | | Shell life (day) | | | >30 | >30 | >30 | >30 | >30 | >30 | >30 | >30 |

### [Table 3]

**Table 3**

| (Parts by mass) | | | | Functional group equivalent (g/eq) | Comparative Examples | | | | |
|---|---|---|---|---|---|---|---|---|---|
| | | | | | 1 | 2 | 3 | 4 | 5 |
| Epoxy resin compositio n | (A) | Epoxy resin | (A1-1) Triphenylmethane type epoxy resin (HP-7241) | 172 | | | 75.8 | 25 | |
| | | | (A2-1-1) Bisphenol F diglycidyl ether (jER807) | 168 | 75.3 | | | | 62 |
| | | | (A2-1-2) Bisphenol F diglycidyl ether oligomer (jER4005P) | 1026 | | | | | |
| | | | (A2-2-1) Bisphenol A diglycidyl ether (jER828) | 186 | | | | | |
| | | | (A2-2-2) Bisphenol A diglycidyl ether oligomer (jER1001) | 483 | | | | | |
| | | | (A2-3-1) Phenol novolak type epoxy resin (N730A) | 176 | | 76.2 | | | |
| | | | (A2-3-2) Phenol novolak type epoxy resin (N740) | 183 | | | | 40 | |
| | | | (A2-3-3) Phenol novolak type epoxy resin (N770) | 188 | | | | | |
| | | | (A2-4-1) Naphthalene epoxy resin (HP-4032SS) | 142 | | | | | |
| | (B) | Epoxy resin curing agent | (B1) Resorcinol | 55 | 24.7 | 23.8 | 24.2 | | |
| | | | (B2-1-1) Triphenylmethane type phenol | 99 | | | | 35 | |
| | | | (B2-1-2) Novolak type phenol | 104 | | | | | 38 |
| | (C) | Curing accelerator | 2-Ethyl-4-methylimidazole | - | 0.1 | 0.1 | 0.1 | 0.1 | 0.1 |
| | (D) | Stress relaxation component | Kane Ace MX-136 | - | | | | | |
| | | | EPOLEAD PB4700 | - | | | | | |
| Functional group equivalent ratio [(B)/(A)] between component (A) and component (B) | | | | | 1.0 | 1.0 | 1.0 | 1.0 | 1.0 |
| Epoxy equivalent of epoxy resin (A) (g/eq) | | | | | 168.0 | 176.0 | 172.0 | 178.6 | 168.0 |
| Epoxy equivalent of epoxy resin (A2) (g/eq) | | | | | 168.0 | 176.0 | - | 183.0 | 168.0 |
| Content of (A1) in epoxy resin (A) (mass%) | | | | | 0 | 0 | 100.0 | 38.5 | 0 |
| Content of (A2) in epoxy resin (A) (mass%) | | | | | 100.0 | 100.0 | 0 | 61.5 | 100.0 |
| Content of (A2-1) in epoxy resin (A2) (mass%) | | | | | 100.0 | 0 | - | 0 | 100.0 |
| Content of (A2-2) in epoxy resin (A2) (mass%) | | | | | 0 | 0 | - | 0 | 0 |
| Content of (A2-3) in epoxy resin (A2) (mass%) | | | | | 0 | 100.0 | - | 100.0 | 0 |
| Content of (A2-4) in epoxy resin (A2) (mass%) | | | | | 0 | 0 | - | 0 | 0 |
| Content of (B1) in epoxy resin curing agent (B) (mass%) | | | | | 100.0 | 100.0 | 100.0 | 0 | 0 |
| (A) content in epoxy resin composition (mass%) | | | | | 75.2 | 76.1 | 75.7 | 64.94 | 61.94 |
| (B) content in epoxy resin composition (mass%) | | | | | 24.7 | 23.8 | 24.2 | 34.97 | 37.96 |
| Evaluation results | | Hydrogen gas permeation coefficient (× 10⁻¹¹ cc·cm/cm²·sec·cmHg) | | | 7.1 | 3.8 | 3.4 | 3.4 | 8.8 |
| | | Glass transition temperature (Tg) (°C) | | | 79.5 | 87.1 | 162.0 | 175.0 | 115.0 |
| | | Tensile stress (MPa) | | | 82.1 | 88.5 | 65.0 | 66.0 | 72.4 |
| | | Tensile elongation (%) | | | 3.3 | 3.7 | 1.8 | 2.1 | 2.7 |
| | | Tensile elastic modulus (GPa) | | | 3.4 | 3.4 | 2.7 | 2.9 | 3.6 |
| | | Pot life (h) | | | >24 | >24 | >24 | >24 | >24 |
| | | Shell life (day) | | | >30 | >30 | >30 | >30 | >30 |

The components shown in Tables are as follows.

### <Epoxy resin (A)>

(A1-1) Triphenylmethane type epoxy resin (HP-7241): "HP-7241" available from DIC CORPORATION, epoxy equivalent: 172 g/equivalent
(A2-1-1) Bisphenol F diglycidyl ether (jER807): "jER807" available from Mitsubishi Chemical Corporation, epoxy equivalent: 168 g/equivalent
(A2-1-2) Bisphenol F diglycidyl ether oligomer (jER4005P): "jER4005P" available from Mitsubishi Chemical Corporation, epoxy equivalent: 1026 g/equivalent, oligomer type
(A2-2-1) Bisphenol A diglycidyl ether (jER828): "jER828" available from Mitsubishi Chemical Corporation, epoxy equivalent: 186 g/equivalent
(A2-2-2) Bisphenol A diglycidyl ether oligomer (jER1001): "jER1001" available from Mitsubishi Chemical Corporation, epoxy equivalent: 483 g/equivalent, oligomer type
(A2-3-1) Phenol novolak type epoxy resin (N730A): "N730A" available from DIC CORPORATION, epoxy equivalent: 176 g/equivalent
(A2-3-2) Phenol novolak type epoxy resin (N740): "N740" available from DIC CORPORATION, epoxy equivalent: 183 g/equivalent
(A2-3-3) Phenol novolak type epoxy resin (N770): "N770" available from DIC CORPORATION, epoxy equivalent: 188 g/equivalent, 150°C melt viscosity: 0.48 Pa·s
(A2-4-1) Naphthalene epoxy resin (HP-4032SS): "HP-4032SS" available from DIC CORPORATION, epoxy resin represented by Formula (A2-4-3), epoxy equivalent: 142 g/equivalent

### <Epoxy resin curing agent (B)>

(B1) Resorcinol: "RESORCINOL" available from SUMITOMO CHEMICAL COMPANY, LIMITED
(B2-1-1) Triphenylmethane type phenol: "S-TPM-105" available from JFE Chemical Corporation, hydroxyl value equivalent: 99 g/equivalent
(B2-1-2) Novolak type phenol: "TD-2131" available from DIC CORPORATION, hydroxyl value equivalent: 104 g/equivalent, softening point: 78 to 82°C

### <Curing accelerator (C)>

2-Ethyl-4-methylimidazole: available from Tokyo Chemical Industry Co., Ltd.

### <Stress relaxation component (D)>

Kane Ace MX-136: Core-shell rubber particle-dispersed epoxy resin master batch "Kane Ace MX-136" available from KANEKA CORPORATION, epoxy type Bis-F, particle-polybutadiene/silicone, particle-blending amount: 25%

EPOLEAD PB4700: Epoxidized polybutadiene "EPOLEAD PB4700" available from DAICEL CORPORATION, molecular weight of from 2000 to 3500

### <Non-reactive diluent (E)>

Xylene resin: xylene formaldehyde resin, "NIKANOL Y-300" available from Fudow Co., Ltd., viscosity at 25°C: 285 mPa·s, hydroxyl group equivalent: 2,805 g/equivalent (hydroxyl value: 20 mgKOH/g)

Benzyl alcohol: available from Tokyo Kasei Kogyo Co., Ltd.

It can be understood from Tables 1 and 2 that each of the cured products of the epoxy resin compositions of the examples can achieve a hydrogen gas permeation coefficient of 7.0 (× 10⁻¹¹ cc·cm/cm²·sec·cmHg) or less, a glass transition temperature of 100°C or more, and a tensile elongation of 3.0% or more. Furthermore, the pot life and shelf life of the epoxy resin composition is also good. In contrast, the cured products of the epoxy resin compositions of Comparative Examples 1 to 5 described in Table 3 resulted in inferior in any of the hydrogen gas barrier property, glass transition temperature, or tensile elongation.

By adding a stress relaxation component (D), the cured products of the epoxy resin compositions of Examples 14 and 15 had low tensile stress and tensile elastic modulus values, while retaining the values of the hydrogen gas barrier property, glass transition temperature, and tensile elongation equivalent to those in other examples, and a stress relaxation effect was found.

In addition, the cured products of the epoxy resin compositions of Examples 16 and 17 in which a non-reactive diluent (E) was blended were found to have improved tensile stress as compared with that of Example 6.

### Industrial Applicability

According to the present invention, an epoxy resin composition capable of preparing a cured product having a high hydrogen gas barrier property, high heat resistance, and a high elongation; a cured product thereof; a prepreg using the epoxy resin composition; a fiber-reinforced composite material; and a high-pressure gas container can be provided. The high-pressure gas container has a high hydrogen gas barrier property and is suitable as a container for storing high-pressure hydrogen gas.

## Claims

1. An epoxy resin composition, comprising an epoxy resin (A) and an epoxy resin curing agent (B),
the epoxy resin (A) comprising an epoxy resin (A1) and an epoxy resin (A2),
the epoxy resin (A1) being an epoxy resin having a glycidyl group derived from triphenylmethane type phenol, and
the epoxy resin (A2) being at least one selected from the group consisting of: an epoxy resin (A2-1) having a glycidyl group derived from bisphenol F; an epoxy resin (A2-2) having a glycidyl group derived from bisphenol A; an epoxy resin (A2-3) having a glycidyl group derived from novolak type phenol; and an epoxy resin (A2-4) having a glycidyl group derived from a polyol having a naphthalene backbone,
wherein [(A1)/(A2)], a mass ratio of the epoxy resin (A1) to the epoxy resin (A2) in the epoxy resin (A), is 1/99 to 90/10,
the epoxy resin curing agent (B) comprising resorcinol (B1).

2. The epoxy resin composition according to claim 1, wherein the epoxy resin curing agent (B) further comprises an epoxy resin curing agent (B2) other than resorcinol (B1), and the epoxy resin curing agent (B2) comprises a phenolic curing agent (B2-1) other than resorcinol (B1).

3. The epoxy resin composition according to claim 2, wherein the phenolic curing agent (B2-1) comprises at least one selected from the group consisting of bisphenol F, bisphenol A, novolak type phenol, and triphenylmethane type phenol.

4. The epoxy resin composition according to any one of claims 1 to 3, wherein [(A1)/(A2)], a mass ratio of the epoxy resin (A1) to the epoxy resin (A2) in the epoxy resin (A), is 5/95 to 70/30.

5. The epoxy resin composition according to any one of claims 1 to 4, further comprising a curing accelerator (C), the curing accelerator (C) comprising at least one selected from the group consisting of imidazoles, tertiary amines, and phosphorus compounds.

6. The epoxy resin composition according to any one of claims 1 to 5, further comprising a stress relaxation component (D).

7. The epoxy resin composition according to any one of claims 1 to 6, further comprising a non-reactive diluent (E).

8. The epoxy resin composition according to any one of claims 1 to 7, wherein a cured product of the epoxy resin composition has a hydrogen gas permeation coefficient at 23°C of 7.0 × 10⁻¹¹ [cc·cm/(cm²·s·cmHg)] or less.

9. A cured product of the epoxy resin composition according to any one of claims 1 to 8.

10. A prepreg comprising the epoxy resin composition according to any one of claims 1 to 8 and a reinforcing fiber.

11. The prepreg according to claim 10, wherein the reinforcing fiber is at least one selected from the group consisting of a carbon fiber, a glass fiber, and a basalt fiber.

12. The prepreg according to claim 10 or 11, wherein the prepreg is a tow prepreg or a tape prepreg.

13. A fiber-reinforced composite material, which is a cured product of the prepreg according to any one of claims 10 to 12.

14. A high-pressure gas container comprising the fiber-reinforced composite material according to claim 13.
